(19) Europäisches Patentamt

European Patent Office

Office européen des brevets

(11) **EP 1 091 341 A2**

(12) **EUROPEAN PATENT APPLICATION**

(43) Date of publication:
**11.04.2001 Bulletin 2001/15**

(51) Int. Cl.$^7$: **G09G 3/34**

(21) Application number: **00119390.3**

(22) Date of filing: **11.09.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **04.10.1999 JP 28264199**

(71) Applicant: **Hitachi, Ltd.**
**Chiyoda-ku, Tokyo 101-8010 (JP)**

(72) Inventors:
• **Hirakata, Junichi**
**Chiba-shi,Chiba-ken (JP)**

• **Nakayoshi, Yoshiaki**
**Mobara-shi, Chiba-ken (JP)**
• **Ono, Kikuo**
**Mobara-shi, Chiba-ken (JP)**
• **Slhingai, Akira**
**Chiba-shi, Chiba-ken (JP)**

(74) Representative:
**Beetz & Partner**
**Patentanwälte**
**Steinsdorfstrasse 10**
**80538 München (DE)**

(54) **Lquid crystal display device and driving method thereof**

(57) A liquid crystal display device is provided with a display control circuit (CRL) which supplies display data to the drain drivers (DDR) and the gate drivers (GDR) of a liquid crystal panel (PNL), an illumination power source (INV) which supplies electric power to a light source (L, BL) which illuminates the liquid crystal panel with light, and a control circuit (LCON) which controls the illumination power source. The present invention enables the liquid crystal display device to display high-luminance pictures and to be improved in its kinematic picture display characteristics. To this end, in the invention, with respect to the cycle of a first step in which the display control circuit supplies display data to the drain drivers, the time from the starting time of the first step in the second step which supplies electric power for blinking the liquid crystal panel, until the lighting starting time of the light source of the second step is set to satisfy the relationship of $t1 + t2 < F$ .

*FIG. 1*

EP 1 091 341 A2

**Description**

BACKGROUND OF THE INVENTION

1. Field of the Invention

The present invention relates to a liquid crystal display device and, more particularly, to a liquid crystal display device which has high luminance and is superior in kinematic picture display characteristics.

2. Description of the Related Art

Liquid crystal display devices are widely used as high-resolution display devices for computers and other equipment. The liquid crystal display devices are basically classified into two types: the type in which a so-called liquid crystal panel is constructed in such a manner that a liquid crystal layer is interposed between two (a pair of) substrates at least one of which is made of transparent glass or the like, and predetermined pixels are turned on or off by selectively applying voltages to various kinds of pixel-forming electrodes which are formed over the substrates of the liquid crystal panel; and the type in which such various kinds of electrodes and pixel-selecting active elements are formed, and predetermined pixels are turned on or off by selecting the corresponding active elements from these active elements.

In particular, the latter type of liquid crystal display device is called an active matrix type, and has become a leading liquid crystal display device because of its contrast performance and its high-speed display performance. Two active matrix types of liquid crystal display devices are known; a so-called vertical electric field type and a so-called lateral electric field type (also called an IPS type). The vertical electric field type of liquid crystal display device is constructed to apply an electric field for changing the direction of alignment of its liquid crystal layer, between an electrode formed on one of its substrates and an electrode formed on the other, while the lateral electric field type of liquid crystal display device is constructed so that the direction of an electric field to be applied to its liquid crystal layer is made nearly parallel to the surfaces of its substrates.

Each of the above-described kinds of liquid crystal display devices is provided with a light source device (referred to generally as a backlight) which illuminates the liquid crystal panel from the back surface thereof. Two types of backlights are known; a side edge backlight and a direct backlight. In the side edge backlight, a lamp (a linear light source or a linear lamp: cold-cathode fluorescent tube) is disposed on a side edge of a light guide plate made of a transparent material, while in the direct backlight, a lamp is disposed directly below a liquid crystal panel.

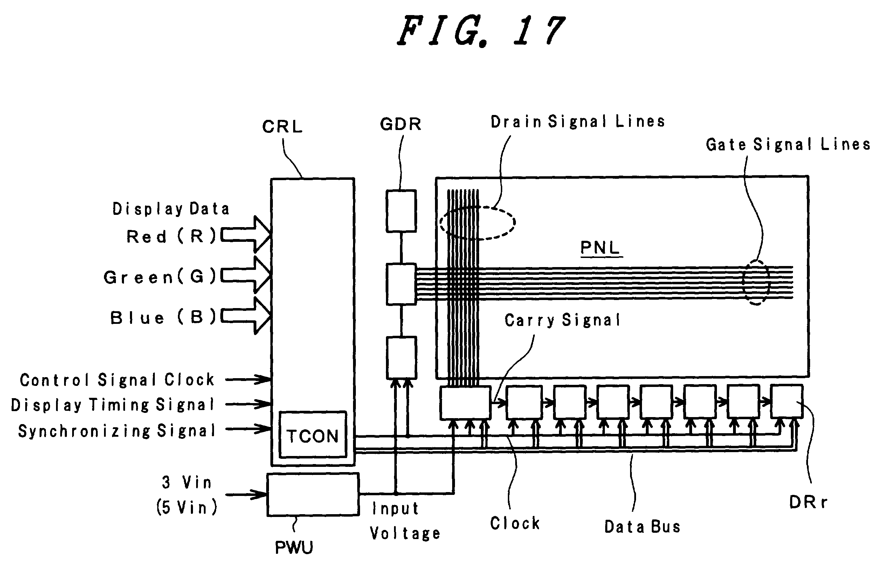

Fig. 17 is an explanatory view of the construction and the drive system of a general active matrix type liquid crystal display device to which the invention is applied. This kind of liquid crystal display device has a liquid crystal panel PNL, drain drivers DDR which are circuits (IC chips) for driving data lines (also called drain signal lines or drain lines), and gate drivers GDR which are circuits (IC chips) for driving scanning signal lines (also called gate signal lines or gate lines). The liquid crystal display device is also provided with a power source circuit PWU and a display control device CRL which is a display control part for supplying display data for displaying a picture, clock signals and gray scale voltages and the like to the drain drivers DDR and the gate drivers GDR.

Display data supplied from an external signal source such as a computer, a personal computer or a television receiver circuit and a control signal clock, a display timing signal and a synchronizing signal are inputted to the display control device CRL. The display control device CRL is provided with a gray scale reference voltage generation part, a timing controller TCON and the like, and converts the display data supplied from an external part into data of the type which conforms to the format of display on the liquid crystal panel PNL.

Display data and clock signals for the gate drivers GDR and the drain drivers DDR are supplied as shown in Fig. 17. A carry output from each of the drain drivers DDR is applied to the carry input of the next one on an unmodified basis.

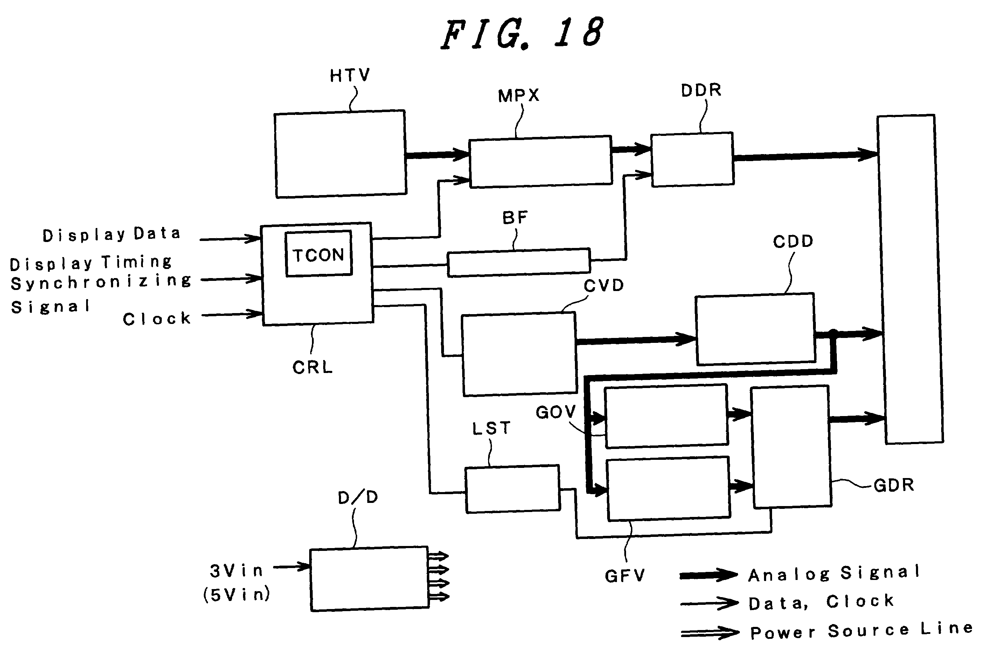

Fig. 18 is a block diagram schematically showing the arrangement of individual drivers of the liquid crystal panel PNL as well as the flow of signals. The drain driver DDR is made of a data latch part for display data such as video (picture) signals, and an output voltage generation circuit. A gray scale reference voltage generation part HTV, a multiplexer MPX, a common voltage generation part CVD, a common driver CDD, a level shifting circuit LST, a gate-on voltage generation part GOV, a gate-off voltage generation part GFD and a DC-DC converter D/D are provided in the power source circuit PWU shown in Fig. 17.

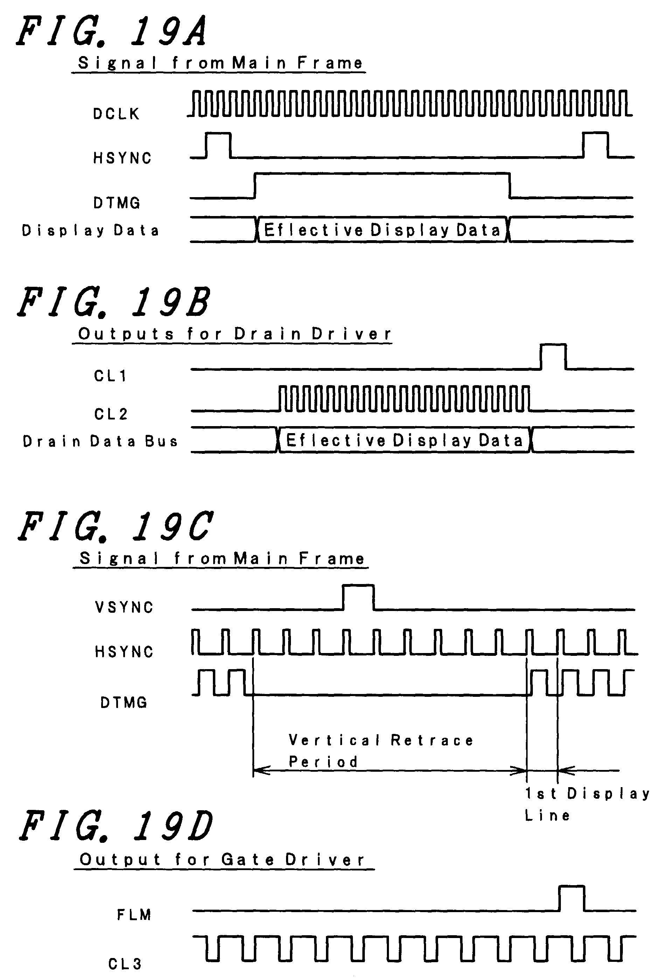

Fig. 19 is a timing chart showing display data to be inputted to the display control device CRL from the signal source (main frame) and signals to be outputted to the drain driver DDR and the gate driver GDR from the display control device CRL. The display control device CRL receives control signals (a clock signal, a display timing signal and a synchronizing signal) from the signal source, and generates a clock D1 (CL1), a shift clock D2 (CL2) and display data as control signals for the drain drivers DDR and, at the same time, generates a frame starting direction signal FLM, a clock G (CL3) and display data as control signals for the gate driver GDR.

Incidentally, in a scheme which uses a low-voltage differential signal (an LVDS signal) for the transmission of display data from the signal source, the LVDS signal from the signal source is converted into an original signal by an LVDS reception circuit mounted on a circuit board (an interface board) on which the display control device is mounted, and the original signal is supplied to both the gate driver GDR and the drain driver DDR.

As is apparent from Fig. 19, the frequency of the shift clock D2 (CL2) for the drain driver DDR is the same as the frequency of each of a clock signal (DCLK) and display data inputted from a main-frame computer or the like, and reaches a high frequency of about 40 MHz (megahertz) in the case of an XGA display device.

Liquid crystal display devices constructed in this manner have been replacing Braun tube (CRT) displays because of their features such as their thinness and low power consumption. A background which has enabled a further progress of this replacement is a technological innovation which has improved the picture quality of such a liquid crystal display device. In particular, recently, there have been strong demands for kinematic picture displays represented by television pictures, and improvements have been made in terms of liquid crystal material and driving method.

However, although the type of luminescence of CRTs is impulse luminescence due to scanning by an electron gun, the type of luminescence of the liquid crystal display device is hold luminescence using a backlight system whose illumination light source is a linear lamp (fluorescent lamp), so that the liquid crystal display device has been regarded as realizing perfect display of kinematic pictures.

Specifically, if a kinematic picture is displayed on the liquid crystal display device, a so-called blurred outline of the kinematic picture occurs and the picture quality is degraded because of the hold characteristic of the liquid crystal display device. This phenomenon is not limited to the liquid crystal display device, and similarly occurs in plasma displays or the like.

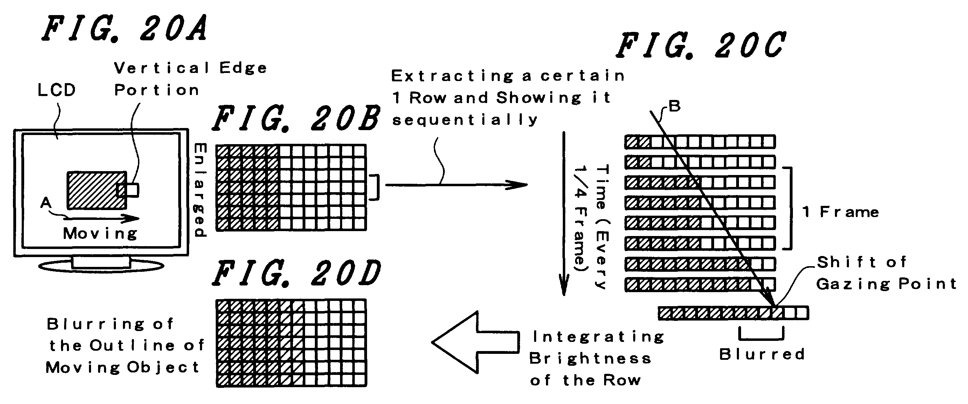

Figs. 20A, 20B, 20C and 20D are schematic views illustrating a mechanism by which a blurred outline of a kinematic picture occurs if the kinematic picture is displayed on a display device having a hold characteristic, such as a liquid crystal display device. Fig. 20A shows the case in which a black picture which travels in the direction of an arrow A is displayed in a portion of a white background screen of a liquid crystal display device LCD, Fig. 20B is an enlarged view of the boundary portion between black and white, Fig. 20C is an explanatory view of the cause of the occurrence of the blurred outline of the kinematic picture, and Fig. 20D is an enlarged view similar to Fig. 20B, showing the state of the blurred outline of the kinematic picture. In each of Figs. 20B, 20C and 20D, every square denotes a pixel. Incidentally, in figs. 20A, 20B, 20C and 20D, the blurred outline of the kinematic picture is shown as "blur" or "kinematic picture blur".

As shown in Fig. 20C in which one line in the boundary portion between black and white shown in Fig. 20B is represented in a time-series manner, as the display picture travels in the direction of the arrow A, the line of gaze of an observer travels in the direction of an arrow B which is drawn to extend obliquely toward the right bottom of Fig. 20C. Even during the travel of the display picture for one frame, the luminances of pixels displayed during that time are held. Since the luminance is obtained by integrating the luminances of the pixels, the blurred outline of the kinematic picture shown in Fig. 20D occurs.

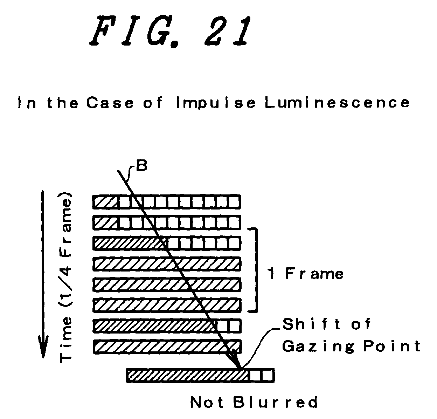

On the other hand, in the impulse type of CRT, such a blurred outline of a kinematic picture does not occur. Fig. 21 is a schematic view similar to Fig. 20C, showing the case where a kinematic picture is displayed on a CRT having no hold characteristic. Since no pixels are displayed during the travel of a picture for one frame, a blurred outline of the kinematic picture does not occur even if the line of gaze travels in the direction of the arrow B as the display picture travels in the direction of the arrow A.

Two methods for overcoming this problem have been reported; an improvement in the liquid crystal material or the display mode of a liquid crystal panel (liquid crystal cell) and a method which uses a direct backlight as a light source.

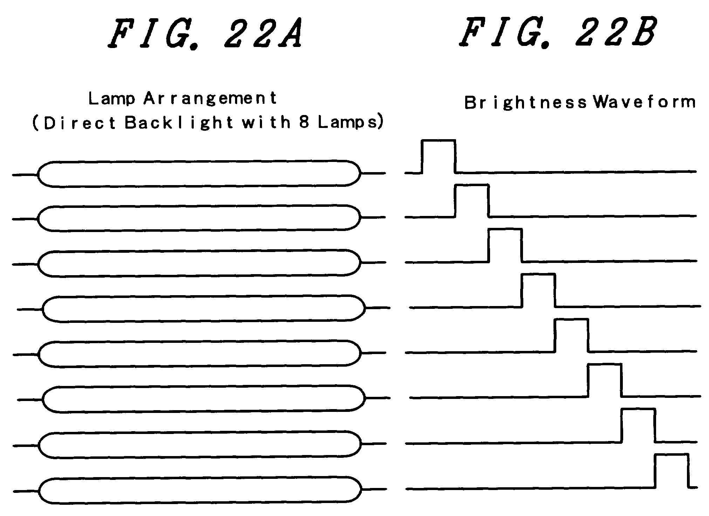

Figs. 22A and 22B are explanatory views of one example of a related art which suppresses a blurred outline of a kinematic picture displayed on a liquid crystal display device, by controlling the driving of the backlight thereof. This liquid crystal display device uses a direct backlight in which eight linear lamps are juxtaposed as shown in Fig. 22A, to shift the timing of the lighting starting time of each of the eight linear lamps from the top to the bottom of the screen as shown in Fig. 22B, and to synchronize the shifting with the scanning cycle of a picture display signal (refer to Japanese Patent Laid-Open No. 109921/1999). Incidentally, the art of improving the kinematic picture of a liquid crystal display device is disclosed, for example, in each of International Patent Publication No. 500915/1996, Japanese Patent Laid-Open No. 202285/1999, Japanese Patent Laid-Open No. 202286/1999 and Japanese Patent Laid-Open No. 237606/1999.

SUMMARY OF THE INVENTION

In a liquid crystal display device of the above-described type which controls the lighting time of its light source, it is possible to prevent the occurrence of a blurred outline of a kinematic picture to some extent and improve the kinematic picture display characteristics thereof; but there is the problem that if the number of linear lamps is increased, the emission time of each of the linear lamps during one cycle of scanning becomes shorter, so that the luminance efficiency of each of the linear lamps lowers and no sufficient luminance is obtained. This is also the problem that it is difficult to similarly apply the above-described related art to other types of light sources.

The invention solves the problems of the related art and provides a liquid crystal display device which has high luminance and superior kinametic picture display characteristics.

Therefore, the basic concept of the invention is to cause a light source to blink in synchronism with the starting time of each scanning signal of a display picture and to control the display luminance of a liquid crystal panel when luminance signals of the same level are supplied, so that the time quadrature value of the luminance value for each cycle is equalized, thereby realizing an impulse luminescence (illumination) equivalent to a CRT and solving a blurred outline of a kinametic picture (also called a ghost of a kinametic picture) in kinametic picture display.

Specifically, the invention satisfies $t1 + t2 < F$, where F represents the cycle (in general, the cycle of a vertical synchronizing signal or a frame cycle; in the following description, reference will be made to the cycle of the vertical synchronizing signal) of a first step of supplying a signal for controlling a display picture (a step of writing display data; the step will be hereinafter described with reference to the vertical synchronizing signal); t1 represents the time from the starting time of the first step in a second step (a step of lighting a light source) which lights the light source for illuminating a liquid crystal panel, until the light-source lighting starting time of the second step; and t2 represents the time of the lighting period of the second step. Representative aspects of the present invention will be described below in detail.

(1) A liquid crystal display device comprises: a liquid crystal panel including a pair of substrates disposed to oppose each other and a liquid crystal layer interposed between the pair of substrates, at least one of the pair of substrates having data signal lines, data electrodes, scanning signal lines and scanning electrodes; a display control part which controls a first step of applying voltages corresponding to a display picture signal to the electrodes on the basis of picture data and a timing signal which are inputted from an external part; and an illumination power source which controls a light source for illuminating the liquid crystal panel and a second step of blinking the light source, and the first step (same as above) of supplying the display picture signal and the second step (same as above) of blinking the light source are respectively scanned at arbitrary cycles. The liquid crystal display device further comprises an illumination power source control part which controls display luminance of the liquid crystal panel so that a time quadrature value of a luminance value for each cycle in the second step is equalized, the display luminance being obtained by the liquid crystal panel being illuminated by the light source when luminance signals of the same level are supplied to the electrodes of the liquid crystal panel.

In the display control device having the above-described construction, the display control part is provided with a timing controller and a reference gray scale voltage generation part, and generates display data to be displayed on the liquid crystal panel, on the basis of the display data and control signals (such as a pixel clock, a display timing signal and a synchronizing signal) which are inputted from the external part. This display data is applied to the liquid crystal panel in the first step.

The illumination power source supplies, in the second step, lighting electric power to the light source, suitably a linear lamp, so that the light source is blinked. In addition, the illumination power source is controlled by the illumination power source control part so that the time quadrature value of the luminance value for each cycle in the second step is equalized, whereby the light source makes an impulse type of illumination. Thus, the occurrence of a blurred outline of a kinametic picture in kinametic picture display is restrained.

(2) A liquid crystal display device comprises: a liquid crystal panel including a pair of substrates disposed to oppose each other and a liquid crystal layer interposed between the pair of substrates, at least one of the pair of substrates having data signal lines, data electrodes, scanning signal lines and scanning electrodes; a display control part which controls a first step of applying voltages corresponding to a display picture signal to the electrodes on the basis of picture data and a timing signal which are inputted from an external part; and an illumination power source which controls a light source for illuminating the liquid crystal panel and a second step of blinking the light source, and the first step of supplying the display picture signal and the second step of blinking the light source are respectively scanned at arbitrary cycles. The liquid crystal display device further comprises: an illumination power source control part which controls display luminance of the liquid crystal panel so that a time quadrature value of a luminance value for each cycle in the second step is equalized, the display luminance being obtained by the liquid crystal panel being illuminated by the light source when luminance signals of the same level are supplied to the electrodes of the liquid crystal panel; and a picture attribute detection part which detects an attribute of the picture data inputted to the display control part and controls the operation of the illumination power source control part.

In the display control device having the above-described construction, the display control part is provided with a timing controller and a reference gray scale voltage generation part, and generates display data to be displayed on the liquid crystal panel, on the basis of the display data and control signals (such as a pixel clock, a display timing signal and a synchronizing signal) which are inputted from the external part. This display data is applied to the liquid crystal panel in the first step.

The illumination power source supplies, in the second step, lighting electric power to the light source, suitably a linear lamp, so that the light source is blinked. In addition, the illumination power source is controlled by the illumination power source control part so that the time quadrature value of the luminance value for each cycle in the second step is equalized, whereby the light source makes an impulse type of illumination. In addition, the picture attribute detection circuit detects the attribute of the display data (picture data) inputted thereto and controls the operation of the illumination power source control circuit on the basis of the detection result in response to whether the motion of the picture is large or small, or whether there is a motion in the picture. The above-described operation of aspect (1) can be selected in accordance with the attribute.

(3) In aspect (2), the attribute of the picture data detected by the picture attribute detection part is at least one of a brightness, a data amount and a motion of the inputted picture data.

The picture attribute detection part detects whether there is a motion (having a predetermined magnitude or more) in a displayed picture, on the basis of at least one of the brightness, the data amount and the motion. If there is a motion (having the predetermined magnitude or more), the operation of the power source control part is controlled so that the above-described operation of aspect (1) is performed.

(4) In aspect (1), (2) or (3), the display control part has a timing controller which controls timing in the first step, and controls blinking of the light source by the illumination power source control part by synchronizing the blinking with a pixel clock outputted from the timing controller. Incidentally, picture characteristics can be detected by the following methods.

One of the methods is to sense the picture characteristics as brightness from the luminance signal of an output signal (for example, a video output signal) from a computer, a television set, a picture reproducing system or the like connected to the liquid crystal display device. Since the human eyes sense a variation in brightness as the logarithmic function thereof, the discrimination ability of the human eyes becomes higher as it becomes darker. Accordingly, the light source is controlled so that the light source emits light by hold luminescence at a duty ratio of 100% with respect to picture data whose luminance is greater than or equal to 50% of a luminance at which the human vision is saturated, while the light source blinks (emits light by so-called impulse luminescence) with respect to picture data whose luminance is smaller than 50% of such luminance.

The other method uses a frame memory which stores picture data supplied to the liquid crystal display device, and compares picture data for the previous frame and picture data for the current frame (picture data which is supplied to the frame memory subsequently to the picture data for the previous frame) and senses a data amount or a motion (a variation in picture) from these picture data. This method can directly detect a data amount from a signal such as an MPEG signal having data travel information.

According to aspect (2) and an invention associated therewith, since a dark picture to which the human spectral luminous efficiency is sensitive is displayed in a blinking state, the interference of pictures between frames is eliminated to restrain a black luminance (the brightness of a black display). In addition, since a bright picture with which the human spectral luminous efficiency is saturated is displayed in a non-blinking state, the luminance of the picture is maintained to enlarge the dynamic range of a displaying ability relative to a variation in the luminance of the picture.

(5) A driving method of a liquid crystal display device which comprises: a liquid crystal panel including a pair of substrates disposed to oppose each other and a liquid crystal layer interposed between the pair of substrates, at least one of the pair of substrates having data signal lines, data electrodes, scanning signal lines and scanning electrodes; a display control part which controls a first step of applying voltages corresponding to a display picture signal to the electrodes on the basis of picture data and a timing signal which are inputted from an external part; and an illumination power source which controls a light source for illuminating the liquid crystal panel and a second step of blinking the light source, wherein the first step of supplying the display picture signal and the second step of blinking the light source are respectively scanned at arbitrary cycles, and a display luminance which is obtained by the liquid crystal panel being illuminated by the light source when luminance signals of the same level are supplied to the display picture is controlled so that a time quadrature value of a luminance value for each cycle in the second step is equalized.

According to the above-described driving method, by executing control on the basis of the construction (1) so that the time quadrature value of the luminance value for each cycle in the second step is equalized, an impulse type of illumination is performed and the occurrence of a blurred outline of a kinametic picture in kinametic picture display is restrained.

(6) A driving method of a liquid crystal display device which comprises: a liquid crystal panel including a pair of substrates disposed to oppose each other and a liquid crystal layer interposed between the pair of substrates, at least one of the pair of substrates having data signal lines, data electrodes, scanning signal lines and scanning electrodes; a display control part which controls a first step of applying voltages corresponding to a display picture signal to the electrodes on the basis of picture data and a timing signal which are inputted from an external part; and an illumination power source which controls a light source for illuminating the liquid crystal panel and a second step of blinking the light source, the first step of supplying the display picture signal and the second step of blinking the light source being respectively scanned at arbitrary cycles, wherein the first step of supplying the display picture signal and the second step of blinking the light source are respectively scanned at arbitrary cycles, display luminance of the liquid crystal panel is controlled so that a time quadrature value of a luminance value for each cycle in the second step is equalized, the display luminance being obtained by the liquid crystal panel being illuminated by the light source when luminance signals of the same level are supplied to the electrodes of the liquid crystal panel, and an attribute of the picture data inputted to the display control part is detected to control the operation of the illumination power source control part.

According to the above-described driving method, on the basis of the construction (1), the operation of the illumination power source control part is controlled in response to whether the motion of the relevant picture is large or small, or whether there is a motion in the picture. The above-described operation of aspect (2) can be selected according to the attribute of the picture.

(7) In aspect (6), the attribute of the picture data detected by the picture attribute detection part is at least one of a brightness, a data amount and a motion of the inputted picture data.

Whether there is a motion (having a predetermined magnitude or more) in a displayed picture is detected on the basis of at least one of the brightness, the data amount and the motion, and if there is a motion (having the predetermined magnitude or more), the operation of the power source control part is controlled with the construction (2).

(8) In aspect 5 or 6, the second step of blinking the light source has an arbitrary constant cycle and the cycle is equal to the cycle of the first step of scanning the display picture signal, the blinking cycle of the light source being a blinking cycle made of a bright state and a dark state, the period of the bright state being the second half of the cycle of the first step.

According to this driving method, even in the case where the response speed of the liquid crystal is slow or the afterglow time of the light source is short, the luminance area per cycle becomes constant, whereby a duplicate image like a ghost due to a blurred outline of a kinametic picture is prevented from easily occurring.

(9) In aspect (5) or (6), the starting time of a bright state of the light source is delayed by an arbitrary constant time from the starting time of the first step of supplying the display picture signal.

If the rise of the response characteristic of a liquid crystal material is slower than that of the luminance of the light source, the luminance area of the liquid crystal panel is decreased to cause a ghost. However, according to this driving method, since the rise of the response characteristic of the liquid crystal material are made equal to that of the luminance of the light source, the luminance area becomes constant.

(10) In aspect 9, the starting time of the bright state of the light source during blinking is delayed by an arbitrary constant time from the starting time of the first step of supplying the signal for controlling the display picture, and the ending time of the bright state is advanced from the starting time of the next cycle of the first step of scanning the display picture signal.

According to this driving method, in a process in which the light source changes from the bright state to the dark state, a picture signal for the next frame starts to be supplied at a time instant when the luminance of the light source reaches 5% of the luminance of the bright state, whereby an overlap between the afterglow of the light source and the rise of the response of the liquid crystal substantially disappears and the luminance area becomes constant.

(11) In aspects (5) to (10), the starting time of the bright state of the light source during blinking is delayed by the arbitrary constant time from the starting time of the first step of supplying the signal for controlling the display picture, a part which controls the display signal including plural scanning signal lines and plural data signal lines all of which are arranged in matrix form, the part which controls the display signal synchronizing the starting time of the bright state with the starting time of an n/2-numbered signal cycle, where n is the number of the signal scanning lines.

In human engineering, it is known that the point of close observation on a screen generally lies in the central area thereof. From this fact, if a display screen is to be made more visible, it is effective to synchronize the starting time with the scanning lines in the center of the screen. Accordingly, when the number of scanning lines is n, the starting time is synchronized with about ±100 scanning lines above and below the n/2-numbered signal cycle.

Thus, visibility is improved.

(12) A liquid crystal display device comprises: a liquid crystal panel including a pair of substrates disposed to oppose each other and a liquid crystal layer interposed between the pair of substrates, at least one of the pair of substrates having data signal lines, data electrodes, scanning signal lines and scanning electrodes; a display control part which controls a first step of applying voltages corresponding to a display picture signal to the electrodes on the basis of picture data and a timing signal which are inputted from an external part; and an illumination power source which controls a light source for illuminating the liquid crystal panel and a second step of blinking the light source, the first step of supplying the display picture signal and the second step of blinking the light source being respectively scanned at arbitrary cycles, wherein the light source has a transparent light guide plate and a structure in which a linear lamp is disposed along each of two parallel edge side surfaces of the transparent light guide plate. The liquid crystal display device further comprises an illumination power source control part which controls display luminance of the liquid crystal panel so that a time quadrature value of a luminance value for each cycle in the second step is equalized, the display luminance being obtained by the liquid crystal panel being illuminated by the light source when luminance signals of the same level are supplied to the electrodes of the liquid crystal panel.

According to this construction, the illumination power source is controlled by the illumination power source control circuit so that the time quadrature value of the luminance value for each cycle in the second step is equalized, whereby the occurrence of a blurred outline of a kinametic picture in kinametic picture display is restrained.

(13) A liquid crystal display device comprises: a liquid crystal panel including a pair of substrates disposed to oppose each other and a liquid crystal layer interposed between the pair of substrates, at least one of the pair of substrates having data signal lines, data electrodes, scanning signal lines and scanning electrodes; a display control part which controls a first step of applying voltages corresponding to a display picture signal to the electrodes on the basis of picture data and a timing signal which are inputted from an external part; and an illumination power source which controls a light source for illuminating the liquid crystal panel and a second step of blinking the light source, the first step of supplying the display picture signal and the second step of blinking the light source being respectively scanned at arbitrary cycles. The liquid crystal display device further comprises: an illumination power source control part which controls display luminance of the liquid crystal panel so that a time quadrature value of a luminance value for each cycle in the second step is equalized, the display luminance being obtained by the liquid crystal panel being illuminated by the light source when luminance signals of the same level are supplied to the electrodes of the liquid crystal panel; and a picture attribute detection part which detects an attribute of the picture data inputted to the display control part and controls the operation of the illumination power source control part, the light source having a transparent light guide plate and a structure in which a linear lamp is disposed along each of two parallel edge side surfaces of the transparent light guide plate.

According to this construction as well, the illumination power source is controlled by the illumination power source control circuit so that the time quadrature value of the luminance value for each cycle in the second step is equalized, whereby the occurrence of a blurred outline of a kinametic picture in kinametic picture display is restrained.

(14) A driving method of a liquid crystal display device which comprises: a liquid crystal panel including a pair of substrates disposed to oppose each other and a liquid crystal layer interposed between the pair of substrates, at least one of the pair of substrates having data signal lines, data electrodes, scanning signal lines and scanning electrodes; a display control part which controls a first step of applying voltages corresponding to a display picture signal to the electrodes on the basis of picture data and a timing signal which are inputted from an external part; an illumination power source which controls a light source for illuminating the liquid crystal panel and a second step of blinking the light source, the light source having a transparent light guide plate and a structure in which a linear lamp is disposed along each of two parallel edge side surfaces of the transparent light guide plate; and an illumination power source control part which controls display luminance of the liquid crystal panel so that a time quadrature value of a luminance value for each cycle in the second step is equalized, the display luminance being obtained by the liquid crystal panel being illuminated by the light source when luminance signals of the same level are supplied to the electrodes of the liquid crystal panel, the first step of supplying the display picture signal and the second step of blinking the light source being respectively scanned at arbitrary cycles, wherein the bright-state starting time of each of the linear lamps during each blinking cycle thereof, which are respectively disposed along the two edge side surfaces, is delayed by a time equal to 1/2 of the cycle of the first step of supplying a signal for controlling the display picture.

According to this construction as well, the illumination power source is controlled by the illumination power source control circuit so that the time quadrature value of the luminance value for each cycle in the second step is equalized, whereby the occurrence of a blurred outline of a kinematic picture in kinematic picture display is restrained.

(15) In aspect (14), the time required for each of the linear lamps to change from a bright state to a dark state is approximately 2/3 of one period of a vertical synchronizing signal, preferably 10 ms or less (the unit "ms" herein represents micrometer).

(16) In aspect (14), the time required for each of the linear lamps to change from a bright state to a dark state or from a dark state to a bright state is 1 ms or less.

(17) In aspect (14), the rate of a luminance variation with time in which each of the linear lamps changes from a bright state to a dark state and the rate of a luminance variation with time in which the liquid crystal panel changes from a bright state to a dark state are made equal to each other, and the ending times of the luminance variations are synchronized with each other and the difference in luminance between the luminance variations is made 5% or less.

(18) In aspect (12) or (13), the time required for each of the linear lamps to change from the bright state to the dark state or from the dark state to the bright state is 10 ms or less, and each of the linear lamps has red (R), green (G) and blue (B) phosphors and the blue (B) phosphor has the smallest afterglow ratio of all the red (R), green (G) and blue (B) phosphors. The afterglow ratio [of blue (B) to green (G) to red (R)] is preferably 1:2:2 or more.

(19) In aspect (14), the time required for the emission luminance of the blue (B) phosphor of each of the linear lamps to change from the bright state to the dark state is 1 ms or less.

(20) In aspect 14, the time required for each of the linear lamps to change from a 50% luminance to a 10% luminance and the time required for the luminance response time of the liquid crystal panel to change from a 50% luminance to a 10% luminance are made equal to each other, where the luminance of the bright state of each of the linear lamps is 100%.

(21) In aspect 14, the time required for the luminance of the liquid crystal panel to change from 100% to 10% is within a dark period of one blinking cycle of the light source, where the luminance of the bright state of the liquid crystal panel is 100%.

(22) In aspect 14, a period which is occupied by the bright state in one cycle period during which each of the linear lamps blinks is 30% or more of the one cycle period.

(23) In aspect 14, in one cycle period during which each of the linear lamps blinks, the dark-state luminance of each of the linear lamps is 5% or more of a peak value of the bright-state luminance of the same.

(24) In aspect 14, in one cycle period during which each of the linear lamps blinks, the luminance area ratio of a bright state to a dark state is 3:1 or more.

(25) In aspect 14, a cycle during which each of the linear lamps blinks is n times a cycle during which the display signal is scanned (twice or more (twice to four times, preferable three times or more).

(26) In aspect 14, each of the linear lamps is made to blink without depending on the cycle ratio of a bright state to a dark state in one cycle, an electric power to be supplied to each of the linear lamps being made constant.

(27) In aspect 26, electric power supplied when each of the linear lamps is blinking is made equal to electric power supplied when neither of the linear lamps is blinking, by controlling the current of each of the linear lamps.

The operations and advantages of the above-described construction of the invention will be described below in detail with reference to the relevant ones of the accompanying drawings.

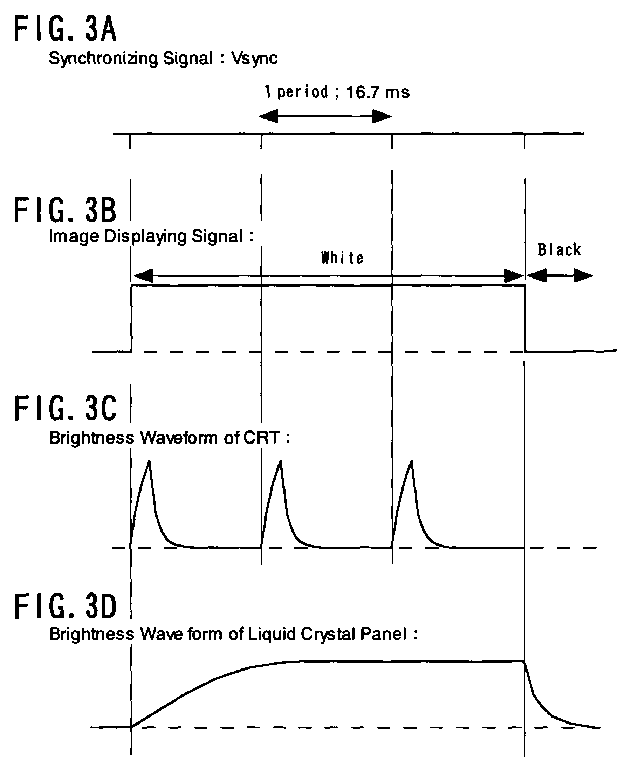

Figs. 3A to 3D are temporal luminance waveform diagrams relative to an arbitrary point on the screen of each of a liquid crystal display device and a CRT for illustrating the basic concept of the invention. Fig. 3A shows a synchronizing signal (a vertical synchronizing signal $V_{SYNC}$) whose cycle is 16.7 ns (the unit "ns" herein represents nanosecond). Fig. 3B shows the waveform of a picture display signal (display data) which provides a white display against a black background (the waveform obtained when a change from black display to white display occurs and then a change from white display to black display occurs). Fig. 3C shows the luminance waveform of the CRT for the sake of comparison. Fig. 3D shows the response waveform of the liquid crystal.

Since the CRT performs scanning with an electron gun at a cycle of 60 Hz, the luminescence of the CRT is an impulse luminescence having the pulse-shaped waveform shown in Fig. 3C. However, since the human eyes recognize brightness (luminance) in the form of a time quadrature based on an interval of approximately 1/60 ms (16.7 ms), the human eyes sense the luminance of the CRT as a normally constant luminance even in the case of the impulse luminescence.

On the other hand, the liquid crystal panel makes a hold type emission which normally exhibits a constant luminance as shown in Fig. 3D, and it has been reported that when a display picture is moving (travelling), the following phenomenon occurs: the peripheral outline portion of the display picture becomes difficult to discriminate (refer to the above-cited Japanese Patent Laid-Open No. 109921/1999).

To solve this phenomenon, the illumination of the liquid crystal panel needs to be made an impulse type illumination like that of the CRT. One approach is to blink at a constant cycle a backlight which is a light source of the liquid crystal panel, or not only is the backlight blinked, but it is also necessary to synchronize the backlight with display data (picture data) or scanning signal data for the liquid crystal panel.

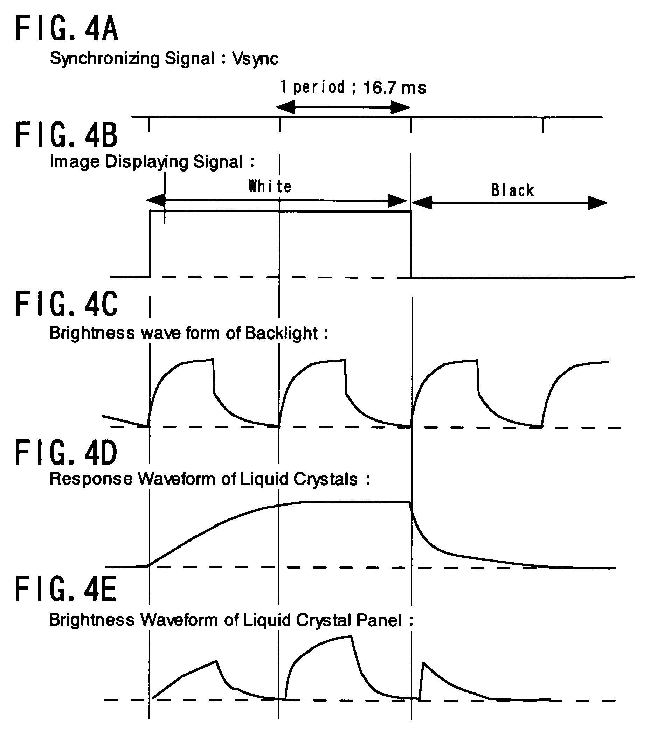

Figs. 4A to 4E are temporal luminance waveform diagrams of the display screen of the liquid crystal display device whose backlight is being blinked. Fig. 4A shows a synchronizing signal (a vertical synchronizing signal $V_{SYNC}$) similar to that shown in Fig. 3A. Fig. 4B shows the waveform of a picture display signal (the waveform obtained when a change from black display to white display occurs and then a change from white display to black display occurs). Fig. 4C shows the luminance waveform of the backlight. Fig. 4D shows the response waveform of the liquid crystal. Fig. 4E shows the luminance response waveform of the liquid crystal panel.

In principle, as shown in Fig. 4C, the quadrature value of each cycle of the luminance waveform is constant during white display, and is normally "0" during black display. On the other hand, the response time (shown in Fig. 4D) of a liquid crystal material is finite and has a form obtained by multiplying the blinking luminance waveform of the backlight by the response waveform of the liquid crystal, and the luminance response waveform of the liquid crystal panel assumes that shown in Fig. 4E. If the time positions of synchronization are incomplete, the luminance waveform quadrature value during white display varies for each cycle, so that a picture is recognized as a duplicate image.

Incidentally, a standard backlight which serves as a light source is a direct backlight disposed below the liquid crystal panel or a side edge backlight, but may also be a front light of the type in which a light guide plate is disposed on a liquid crystal panel. In addition, a polarizer or polarizers are disposed on a surface or surfaces (either or both of upper and lower surfaces) of the liquid crystal panel. Although such polarizers are generally a pair of upper and lower polarizers, either one of upper and lower polarizers may only be disposed.

Regarding the method of providing synchronization for the timing of blinking the light source, the second step of blinking the backlight is given an arbitrary constant cycle and the cycle is made equal to the cycle of the first step of scanning the display signal. The blinking cycle of the light source is made a blinking cycle made of a bright state and a dark state, and the period of the bright state is made the second half of the cycle of the first step.

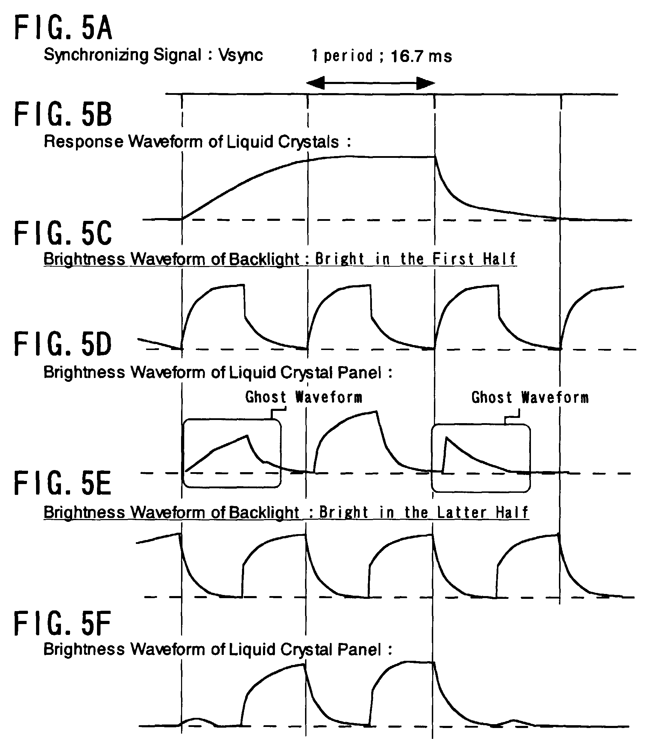

Figs. 5A to 5E are waveform diagrams which illustrate the luminance response of a general liquid crystal. Fig. 5A shows a synchronizing signal (a vertical synchronizing signal $V_{SYNC}$), Fig. 5B shows the response waveform of the liquid crystal, Fig. 5C is the luminance waveform of a backlight (the first half corresponds to a bright state), Fig. 5D shows the luminance waveform of the liquid crystal panel, Fig. 5E shows the luminance waveform of the backlight (the second half corresponds to a bright state), and Fig. 5F shows the luminance waveform of the liquid crystal panel.

In Figs. 5A to 5F, in the case where the backlight is brought into a bright state as shown in Fig. 5C at the same cycle as the scanning cycle of display data (for example, the vertical synchronizing signal $V_{SYNC}$) and during the first half of each cycle when the time ratio of a bright state to a dark state is 1:1, if the response speed of the material of the liquid crystal panel is slow, the luminance area of the waveform for each cycle (refer to Fig. 4D) does not become constant, and as shown in the ghost waveform portion shown in Fig. 5D, a picture is displayed as a duplicate image like a ghost phenomenon for a television picture. For this reason, if the backlight is brought into a bright state during the second half of each cycle as shown in Fig. 5E, the luminance area of the waveform for each cycle becomes equal, and such a phenomenon does not easily occur (refer to the waveform shown in Fig. 5F).

In this example, the time ratio of the bright state to the dark state of the backlight is 1:1. However, in the case of a different time ratio, a part which controls the display signal is provided with plural scanning signal lines and plural data signal lines all of which are arranged in matrix form, and the starting time of the bright state of the light source during blinking is delayed by an arbitrary constant time from the starting time of the first step of supplying a signal.

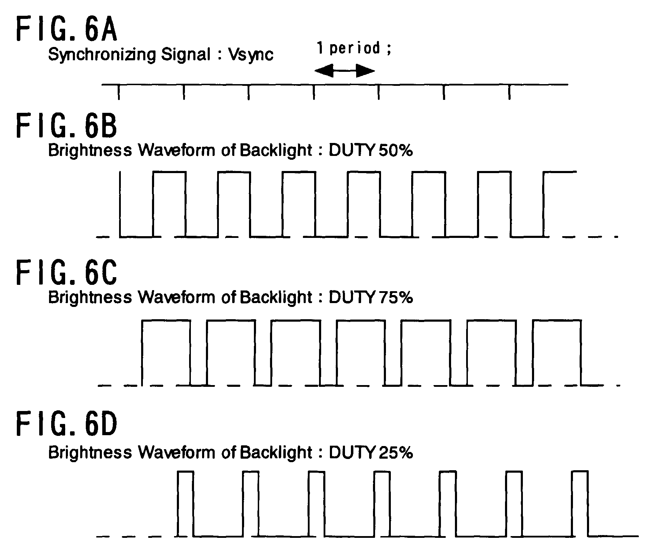

Figs. 6A to 6D are explanatory views of one example of the starting time of a bright state in the case of a different time ratio. Fig. 6A shows the waveform of a synchronizing signal (vertical synchronizing signal $V_{SYNC}$), and Figs. 6B to 6D show the luminance waveforms of a backlight at time ratios (duty ratios) of 50%, 75% and 25%, respectively.

Scanning of a display signal is started in synchronism with the vertical synchronizing signal $V_{SYNC}$ of the waveform shown in Fig. 6A, and the bright state is started after a constant delay from the vertical synchronizing signal $V_{SYNC}$, and the bright state changes to a dark state when the next synchronizing signal (the vertical synchronizing signal $V_{SYNC}$) is started. Experiments have proved that this control is effective when the luminance rise (fall) characteristic of the phosphor of a linear lamp which constitutes the backlight is 1 ms or less.

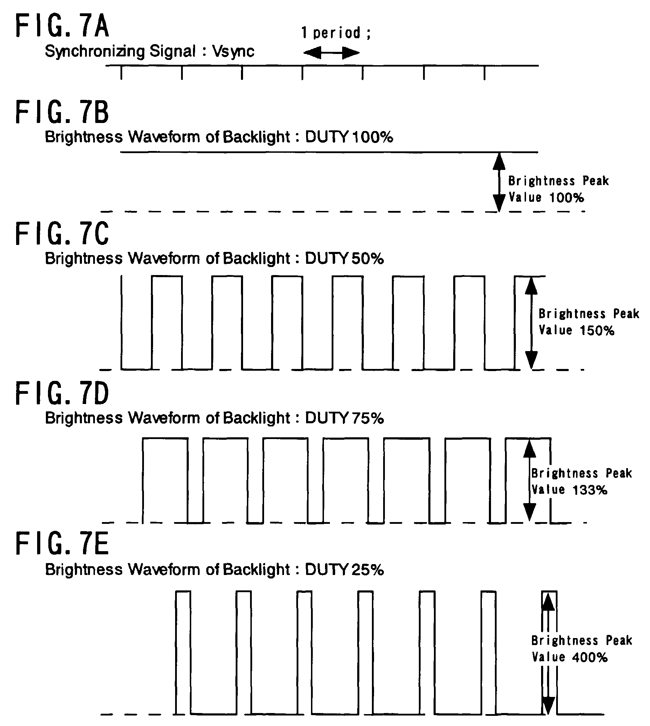

Figs. 7A to 7D are explanatory views of another example of the starting time of the bright state in the case of a different time ratio. Fig. 7A shows the waveform of a synchronizing signal (vertical synchronizing signal $V_{SYNC}$), and Fig. 7B shows the luminance waveform of a backlight (during continuous lighting: its duty ratio is 100%). The luminance peak value at the time of the duty ratio of 100% is 100%. Figs. 7C to 7E show the luminance waveforms of the backlight that correspond to duty ratios of 50%, 75% and 25%, respectively.

By setting luminance peak values, respectively, to 150%, 133% and 400% for the individual duty ratios of 50%, 75% and 25%, it is possible to make the luminance quadrature value of the backlight approximately 100% which is similar to the case of Fig. 7B, whereby it is possible to keep the brightness of the liquid crystal panel constant irrespective of the duty ratio. The other control is similar to that described above in connection with Fig. 6.

In the case where the luminance rise (fall) characteristic of the phosphor of a linear lamp is a comparatively slow rise characteristic, the starting time of the bright state of the backlight during blinking is delayed by an arbitrary constant time from the starting time of the first step of supplying a signal for controlling a display picture, and the ending time of the bright state is advanced from the starting time of the next cycle of the signal scanning.

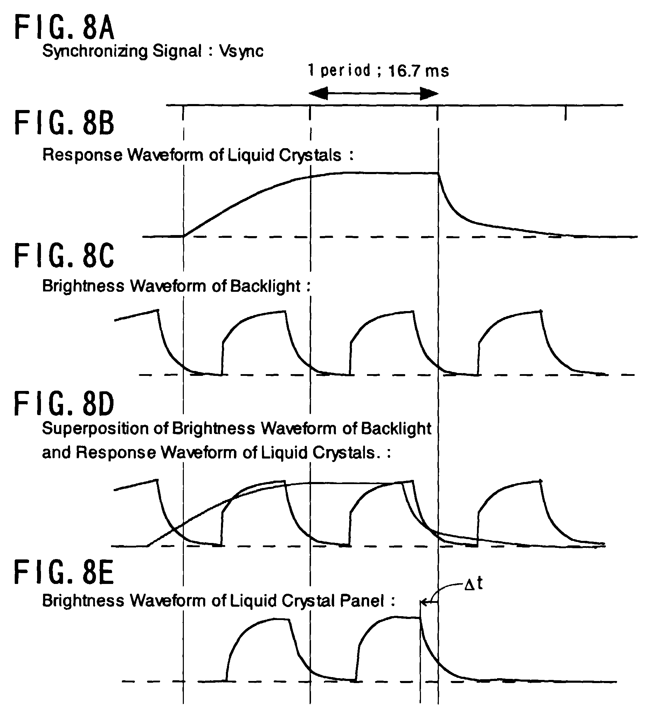

Figs. 8A to 8D are explanatory views of blinking control to be exerted on the backlight in the case where the luminance rise (fall) characteristic of the phosphor of a linear lamp is a comparatively slow rise characteristic, and show the waveforms of luminance variations with time which occur when a bright state and a dark state are alternately repeated with an average linear lamp (white) at a duty ratio of 50%. Fig. 8A shows the waveform of a synchronizing signal (vertical synchronizing signal $V_{SYNC}$), Fig. 8B shows the response waveform of a liquid crystal, Fig. 8C shows the luminance waveform of the backlight, Fig. 8D shows a waveform in which the luminance waveform of the backlight and the response waveform of the liquid crystal are superposed on each other, and Fig. 8E shows the luminance waveform of a liquid crystal panel.

If the saturation value of the luminance of the linear lamp which constitutes the backlight is 100%, the rise time required for the luminance to change from 0% to 90% is about 5 ms, while the fall time required for the luminance to change from 100% to 10% is about 8 ms. In this case, the luminance waveform of a liquid crystal panel of the type in which the ending time of its bright state is synchronized with the starting time of the next frame is such that the liquid crystal response for the next frame causes leak light owing to the afterglow of the luminance fall characteristic of the linear lamp, so that the luminance area of the waveform in each cycle does not become constant.

As shown in the liquid crystal panel luminance waveform shown in Fig. 8E, if the ending time of the bright state of the linear lamp is advanced by $\Delta t$ from the starting time of the next frame, the luminance area between each frame is uniformized and a ghost waveform is restrained, whereby the picture quality of the liquid crystal panel is improved.

Although the blinking cycle of the light source and the synchronizing timing of the scanning cycle of a display signal have been described above, liquid crystal display devices generally have several hundred or more scanning signal lines (gate lines), and it is important which of the scanning signal lines should be used to establish synchronizing timing.

To this end, in the present invention, the starting time of the bright state of the light source during blinking is delayed by an arbitrary constant time from the starting time of the first step of supplying the signal for controlling the display picture, and is synchronized with the starting time of an n/2-numbered signal cycle, where n is the number of the scanning signal lines (gate lines).

For example, a so-called XGA display type of liquid crystal panel for a liquid crystal display device has $1024 \times 768$ pixels and 768 scanning signal lines. The cycle of scanning is 60 Hz (hertz), and during this period, the 768 scanning signal lines are scanned sequentially from the top to the bottom of the screen of the liquid crystal panel. Therefore, a time delay of about 16.7 ms occurs between the first scanning signal line and an n-numbered scanning signal line.

Accordingly, it is important which of the scanning signal lines should be selected as a synchronizing signal line with which to synchronize the starting time of the blinking cycle of a backlight (a light source or a linear lamp which constitutes the light source). In human engineering, it is generally known that the point of close observation on a screen generally lies in the central area thereof. From this fact, if a display screen is to be made more visible, it is effective to synchronize the starting time with the scanning signal lines in the center of the screen. Accordingly, when the number of scanning signal lines is n, the starting time is synchronized with about ±100 scanning lines above and below the n/2-numbered scanning signal line. Thus, visibility is improved.

Moreover, in order to establish complete synchronizing timing over the entire screen of the liquid crystal panel, the light source has a transparent light guide plate and a structure in which a lamp is disposed along each of the upper and lower edge side surfaces of the transparent light guide plate, and the starting time of the bright state of each of the upper and lower edge side lamps during each blinking cycle is delayed by a time equivalent to 1/2 of the cycle of the first step of supplying a signal for controlling a display picture.

The light source of the liquid crystal display device is generally a so-called side edge backlight which includes the above-described transparent light guide plate and lamps disposed along either or both of the upper and lower side edge surfaces or the right and left side edge surfaces of the light guide plate. Normally, a notebook personal computer includes one linear lamp disposed along one edge surface of its light guide plate, but in the case of a desktop monitor and a so-called liquid crystal television in order to obtain a high luminance, it is customary that one, two, three or more linear lamps be disposed on each of the upper and lower side edge surfaces of its light guide plate. In this case, the synchronizing timing of each of the upper side linear lamps and the lower side linear lamps as well as the starting time of the bright state may be delayed by a time equivalent to about 1/2 of the above-described cycle.

Incidentally, this synchronizing timing subtlety differs according to the luminance rise/fall characteristic of the phosphor of such a linear lamp of the light source. If the time required for the linear lamp to change from a bright state to a dark state or from a dark state to a bright state is 1 ms or less, it is desirable that the response speed of a liquid crystal material be faster.

If the cycle of a data signal (display data or a picture signal) is shorter, for example, 120 Hz (8.3 ms) or 240 Hz (4.2 ms), it is desirable that the luminance rise/fall characteristic of the phosphor of the linear lamp be made 4.2 ms or 2.1 ms or less which is 1/2 of the cycle of the data signal.

On the other hand, if the time required for each of the linear lamps of the light source to change from a bright state to a dark state is 10 ms or less, it is advantageous that the response speed of the liquid crystal (liquid crystal material) is slow. However, in this case, it is important that the rise/fall response speed of the liquid crystal panel be 16.7 ms or less within one blinking cycle of such a linear lamp, for example, 60 Hz.

If the luminance fall characteristic of the phosphor of the linear lamp in particular is slow, the dark state does not become completely black, so that a lowering in luminance is reduced. When the linear lamp is blinked between the bright state and the dark state at a duty ratio of 50%, the luminance quadrature value normally becomes 1/2 of a duty ratio of 100%, but instead is maintained at a 75% luminance. This indicates that a picture degradation in kinematic picture display can be ameliorated not by the introduction of a black period as in the case of CRTs but by introduction of a gray luminance period.

The above-described linear lamp used in the liquid crystal display device is a fluorescent lamp called a cold-cathode fluorescent tube (CFL), and is constructed to emit white light owing to plural kinds of phosphors applied to the inside of the tube. If the emission wavelengths of the respective kinds of phosphors are defined in such a manner that the region from 400 nm (nanometers; the term "nm" herein represents nanometer) to 450 nm is assigned to blue (B), the region from 450 nm to 590 nm is assigned to green (G) and the region from 590 nm to 800 nm is assigned to red (R), the luminance rise/fall characteristics of the phosphors for the respective regions of blue (B), green (G) and red (R) differ from one another.

For this reason, the time required for each of the linear lamps to change from the bright state to the dark state or from the dark state to the bright state is made 10 ms or less, and each of the linear lamps is coated with red (R), green (G) and blue (B) phosphors, and the blue (B) phosphor is given the smallest afterglow ratio of all the red (R), green (G) and blue (B) phosphors. Specifically, the afterglow ratio [of blue (B) to green (G) to red (R)] is preferably 1:2:2 or more.

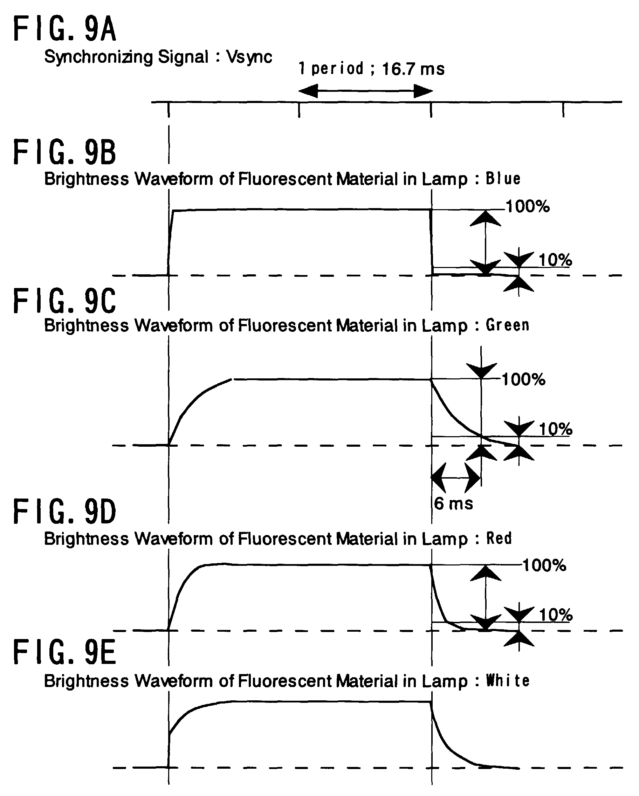

Figs. 9A to 9E are explanatory views of the luminance characteristics of red (R), green (G) and blue (B) phosphors for a general linear lamp. Fig. 9A shows a synchronizing signal (vertical synchronizing signal $V_{SYNC}$), Fig. 9B shows the luminance waveform of the blue (B) phosphor during the lighting of the linear lamp over two cycles of the synchronizing signal (vertical synchronizing signal $V_{SYNC}$) shown in Fig. 9A, Fig. 9C shows the luminance waveform of the green (G) phosphor during the same lighting, Fig. 9D shows the luminance waveform of the red (R) phosphor during the same lighting, and Fig. 9E shows the combined luminance waveform (lamp phosphor luminance waveform: white) of the linear lamp.

As can be seen from Figs. 9A to 9E, the afterglow characteristic of the green (G) phosphor is the slowest, and the time required for its luminance to change from 100% to 10% is approximately 6 ms, but such afterglow characteristic is effective in preventing a lowering in luminance. In addition, since the time characteristics of the respective colors differ from one another, the entire linear lamp (white) shown in Fig. 9E exhibits the combined characteristic of the blue (B), green (G) and red (R) phosphors, whereby it is possible to obtain a luminance characteristic which instantaneously changes and is subsequently moderated slowly.

In particular, when the time required for the emission luminance of the blue (B) phosphor material of the linear lamp of the light source to change from a bright state to a dark state is made 1 ms or less, such a characteristic can be obtained. In addition, it is possible to obtain a far greater advantage by controlling the luminance time characteristic of such a phosphor and the luminance time characteristic of the liquid crystal panel.

The rate of a luminance variation with time in which the linear lamp of the light source changes from a bright state to a dark state and the rate of a luminance variation with time in which the liquid crystal panel changes from a bright state to a dark state are made equal to each other, and the ending times of the luminance variations are synchronized with each other and the difference in luminance between the luminance variations is made 5% or less.

In any of a passive matrix type of STN (super twisted nematic) liquid crystal display device, an active matrix type of TFT liquid crystal display device and a plasma display, there is the problem of smear or crosstalk which causes a so-called false (imitation) dot display at a dot adjacent to a displayed dot (pixel) owing to the dulling (attenuation) of a drive waveform. Although it is difficult to essentially solve this problem, the practical influence of the false dot display on a picture display function can be solved by restraining the luminance of the false dot display to such an extent that the luminance cannot be sensed by the human spectral luminous efficiency. The reason why the difference in luminance is made 5% or less is based on the fact that the limit of the human luminosity factor is a luminance difference of 5% or less.

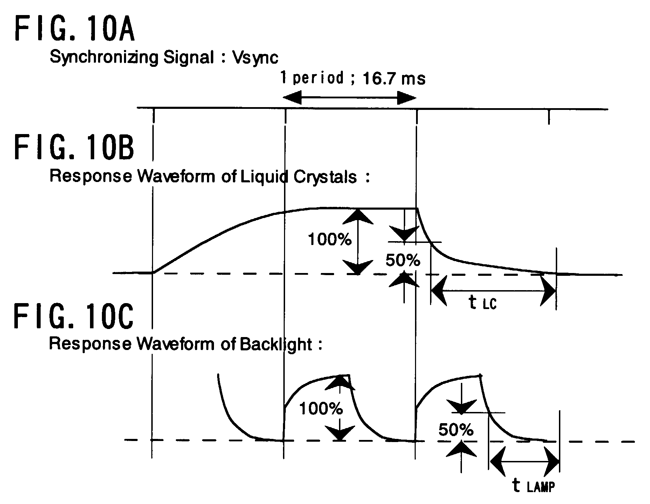

Figs. 10A to 10C are explanatory views of the luminance time characteristic of a light source and the luminance time characteristic of a liquid crystal panel. Fig. 10A shows a synchronizing signal (vertical synchronizing signal $V_{SYNC}$), Fig. 10B shows the response waveform (luminance time characteristic) of the liquid crystal panel, and Fig. 10C shows the response waveform (luminance time characteristic) of the light source (linear lamp). In Figs. 10A to 10C, a level of 50% indicates a level at which the spectral luminous efficiency starts to become larger. The human spectral luminous efficiency becomes larger below approximately 50%.

As shown in Figs. 10A to 10C, if synchronizing timing is set so that the luminance fall curve of the linear lamp and the luminance fall curve of the liquid crystal panel coincide with each other, the quadrature value of the luminance area for each frame becomes constant and superior kinametic picture display can be obtained. The luminance response characteristic of the liquid crystal panel depends on its liquid crystal material and the scanning timing of display signals, and if synchronization relative to the scanning timing of display signals is inappropriate, the luminance area for each frame becomes non-uniform as shown in Fig. 10B.

To prevent the blurring of a kinametic picture, it is preferable that the difference in area luminance ratio between frames be 5% or less, or the luminance peak value at the starting time of the bright state is 10% or less with respect to a saturation value of 100%. This is based on the fact that the human spectral luminous efficiency is equivalent to a logarithmic function value of luminance and, therefore, senses a predetermined luminance variation more sensitively during a dark state than during a bright state. Since the brightness of the human eyes is sensed as an average value for about 16 ms, the human eyes recognize a picture at a spectral luminous efficiency corresponding to the luminance quadrature value within that time. In the case of a high luminance, the human eyes sense brightness in a state closer to impulse luminescence, and the human spectral luminous efficiency corresponds to the peak value of the luminance. In this case, a luminance difference which can be sensed with the human spectral luminous efficiency is 5% or less of the area luminance ratio or 10% or less of the peak value.

In addition, in the case of the light source, a change in luminance from 100% to a 50% is rapid. Accordingly, assuming that the luminance of the bright state of the lamp of the light source is 100%, it is preferable that the time required for a change from 50% to a darker luminance of 10% and the time required for the luminance response time of the aforesaid liquid crystal cell to change from a luminance of 50% to 10% be made equal to each other.

The above description has referred to the case where the time required for the light source lamp to change from the bright state to the dark state is 10 ms or less. However, in the case where this time is 1 ms or less, if the luminance of the bright state of the liquid crystal panel is made 100%, the time required for the luminance to change from 100% to 10% is made shorter than a dark period of one blinking cycle of the light source.

This indicates that, in the case where a so-called linear lamp whose phosphor has a short afterglow is used as a light source, the response of the liquid crystal panel needs to complete within a dark-state period of the light source.

In general, if a light source is blinked and a bright state and a dark state are repeated, an average luminance lowers. For this reason, by using the following method together with the above-described control, it is possible to obtain a good kinametic picture display without causing a lowering in luminance.

A period which is occupied by the bright state in one cycle period during which the light source blinks is made 30% or more of the one cycle period. If a higher luminance is to be obtained, it is preferable to prolong the period of the bright state, but in this case, the response speed of the liquid crystal material needs to be far higher. In the case where the blinking cycle of the light source is 60 Hz, the liquid-crystal response speed is 8.3 ms or less for a duty ratio of 50%, 4.2 ms or less for a duty ratio of 75%, and 11 ms or less for a duty ratio of 30%.

In a method of increasing luminance to a further extent, the dark-state luminance of the linear lamp is made 5% or less of the peak value of the bright-state luminance of the same in one cycle period during which the linear lamp blinks. This value of 5% means the detection limit of the difference in luminance.

In the impulse luminescence of the CRT, the period of each dark state is long, whereas the peak value of each luminance pulse is high. On the other hand, in the liquid crystal display device, since its luminance peak value cannot be made remarkably high (the luminance peak value is restricted by the boosting limit of a lamp-lighting inverter transformer or the electric strength of a lamp), it is necessary to shorten the period of the dark state. In addition, during a luminescence, even if its dark state is not completely black, the human eyes recognize the luminescence as an impulse luminescence if the difference in luminance between the dark state and its bright state is 50% or more.

In addition, in one cycle period during which the light source blinks, the luminance area ratio of a dark state to a bright state is made 1:3 or more. This has the advantage of restraining a lowering in luminance.

Although in the above-described example the light source is blinked in each cycle, a cycle during which the light source blinks (the cycle of the second step) is n times a cycle during which a display signal is scanned (the cycle of the first step). Specifically, the light source may be blinked every second or third signal scanning.

In addition, although the above description has not referred to the luminance peak value of the light source, if the light source is blinked, it is possible to maintain its luminance by keeping constant electric power to be supplied to the light source, without depending on the cycle ratio of the bright state and the dark state in one cycle.

Such a method can be realized by changing the boosting ratio of the transformer of the light-source-lighting inverter power source during blinking or by changing the voltage of the input (primary) terminal of the transformer of the inverter power source. In addition, a current (lamp current) to flow into the linear lamp only during blinking may also be increased with the voltage peak value kept constant.

Although the representative aspects of the present invention and their operations have been described above in detail, the present invention is not limited to any of the above-described aspects, and various modifications can be made without departing from the technical ideas of the present invention. Other objects and aspects of the present invention will become apparent from the following description of embodiments.

These and other objects, features and advantages of the present invention will become more apparent from the following description when taken in conjunction with the accompanying drawings.

BRIEF DESCRIPTION OF THE DRAWINGS

Fig. 1 is a diagrammatic view showing the entire construction of a first embodiment of the liquid crystal display device according to the present invention;

Fig. 2 is a diagrammatic view, showing the entire construction of a second embodiment of the liquid crystal display device according to the invention;

Figs. 3A to 3D are temporal luminance waveform diagrams relative to an arbitrary point on the screen of each of a liquid crystal display device and a CRT for illustrating the basic concept of the invention;

Figs. 4A to 4E are temporal luminance waveform diagrams of the display screen of the liquid crystal display device whose backlight is being blinked;

Figs. 5A to 5E are waveform diagrams which illustrate the luminance response of a general liquid crystal;

Figs. 6A to 6D are explanatory views of one example of the starting time of a bright state in the case of a different time ratio;

Figs. 7A to 7D are explanatory views of another example of the starting time of the bright state in the case of a different time ratio;

Figs. 8A to 8D are explanatory views of blinking control to be exerted on the backlight in the case where the luminance rise (fall) characteristic of the phosphor of a linear lamp is a comparatively slow rise characteristic;

Figs. 9A to 9E are explanatory views of the luminance characteristics of red (R), green (G) and blue (B) phosphors for a general linear lamp;

Figs. 10A to 10C are explanatory views of the luminance time characteristic of a light source and the luminance time characteristic of a liquid crystal panel;

Figs. 11A to 11E are temporal luminance waveform diagrams relative to an arbitrary point on the screen of a liquid crystal panel which constitutes a liquid crystal display device for illustrating Embodiment 1 of the present invention;

Fig. 12 is a diagrammatic view illustrating the construction of the light source of Embodiment 3;

Figs. 13A, 13B and 13C are the luminance waveform diagrams of the linear lamps which constitute the light source in Embodiment 3;

Fig. 14 is a diagrammatic view illustrating one example of the cross-sectional structure of the liquid crystal display device according to the present invention;

Fig. 15 is a diagrammatic view illustrating another example of the cross-sectional structure of the liquid crystal display device according to the present invention;

Fig. 16 is a view showing the external appearance of one example of a high-definition television set in which a liquid crystal display device according to the invention is mounted;

Fig. 17 is an explanatory view of the construction and the drive system of a general active matrix type liquid crystal display device to which the invention is applied;

Fig. 18 is a block diagram schematically showing the arrangement of individual drivers of the liquid crystal panel PNL as well as the flow of signals;

Fig. 19 is a timing chart showing display data to be inputted to the display control device CRL from the signal source (main frame) and signals to be outputted to the drain driver DDR and the gate driver GDR from the display control device CRL;

Figs. 20A, 20B, 20C and 20D are schematic views illustrating a mechanism by which a blurred outline of a kinametic picture occurs if the kinametic picture is displayed on a display device having a hold characteristic, such as a liquid crystal display device;

Fig. 21 is a schematic view similar to Fig. 20C, showing the case where a kinametic picture is displayed on a CRT having no hold characteristic; and

Figs. 22A and 22B are explanatory views of one example of a related art which suppresses a blurred outline of a kinametic picture displayed on a liquid crystal display device, by controlling the driving of the backlight thereof.

DETAILED DESCRIPTION

Preferred embodiments of the invention will be described below in detail with reference to the drawings of the preferred embodiments.

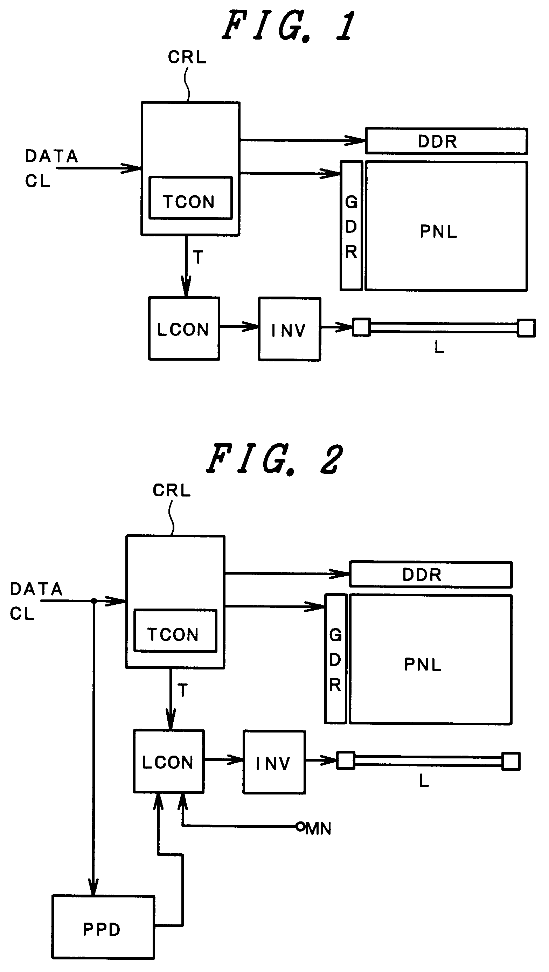

Fig. 1 is a diagrammatic view showing the entire construction of a first embodiment of the liquid crystal display device according to the present invention. In Fig. 1, symbol PNL denotes a liquid crystal panel, symbol DDR a drain driver (a data driver or a data line driving circuit), symbol GDR a gate driver (a scanning line driving circuit), symbol CRL a display control device, symbol TCON a timing controller, symbol L a linear lamp which serves as a light source (an illumination light source (a backlight)), symbol INV an illumination power source which supplies electric power to the light source, and symbol LCON an illumination power source control circuit which constitutes an illumination power source control part. Since the basic driving of the liquid crystal panel PNL has been described above in connection with Figs. 17 to 19, the same description is omitted.

The liquid crystal panel PNL includes a liquid crystal layer and a pair of substrates which are disposed to oppose each other and at least one of which has data signal lines, data electrodes, scanning signal lines and scanning electrodes, and the liquid crystal layer is interposed between the pair of substrates.

The liquid crystal display device also includes a display control part which controls a first step of applying voltages to the electrodes in response to a display picture signal on the basis of picture data and timing signals inputted from an external part, and the illumination power source INV which controls the light source L for illuminating the liquid crystal panel PNL as well as a second step of blinking the light source L. The first step of supplying the picture data to the liquid crystal panel PNL and the second step of blinking the light source L are scanned at arbitrary cycles, respectively.

The liquid crystal display device also includes the illumination power source control circuit LCON which controls the display luminance of the liquid crystal panel PNL so that the time quadrature value of the luminance value for each cycle in the second step is equalized, the display luminance being obtained by the liquid crystal panel PNL being illuminated by the light source L when luminance signals of the same level are supplied to the electrodes of the liquid crystal panel PNL.

In this liquid crystal display device, display data DATA and various timing control signals CL supplied from a body (also referred to as a display data source, or simply as a source) such as a personal computer or a television set are inputted to the display control device CRL, and the display control device CRL processes the display data DATA into a display format for the liquid crystal panel PNL, through a built-in gray scale reference voltage generation part, and supplies the thus-obtained data to the drain driver DDR and the gate driver GDR. This is the first step.

On the other hand, the illumination power source control circuit LCON controls the illumination power source INV on the basis of the various timing signals described previously in connection with Fig. 19, such as a vertical synchronizing signal and a pixel clock which are generated by the timing controller TCON built in the display control device CRL, thereby exerting blinking control on the light source L.

The display control device CRL is provided with the timing controller TCON and the reference gray scale voltage generation part (refer to Fig. 18), and generates display data to be displayed on the liquid crystal panel PNL, on the basis of the display data DATA and control signals (such as a pixel clock, a display timing signal and a synchronizing signal) which are inputted from the external part. This display data is applied to the liquid crystal panel PNL in the first step.

The illumination power source INV supplies, in the second step, lighting electric power to the light source L, suitably a linear lamp, so that the light source L is blinked. In addition, the illumination power source INV is controlled by the illumination power source control circuit LCON so that the time quadrature value of the luminance value for each cycle in the second step is equalized, whereby the light source L makes an impulse type of illumination. Thus, the occurrence of a blurred outline of a kinametic picture in kinametic picture display is restrained.

Fig. 2 is a diagrammatic view showing the entire construction of a second embodiment of the liquid crystal display device according to the invention. In Fig. 2, the same symbols as those shown in Fig. 1 denote the same functional parts, and their basic operations are similar to those described above in connection with Fig. 1. This construction is provided with a picture attribute detection circuit PPD which constitutes a picture attribute detection part which detects the attribute of display data to be inputted to the construction shown in Fig. 1.

The picture attribute detection circuit PPD detects the attribute of the picture data inputted to the display control device CRL and controls the operation of the illumination power source control circuit LCON.

In the liquid crystal display device having this construction as well, similarly to the display control device CRL shown in Fig. 1, the display control device CRL is provided with the timing controller TCON and the reference gray scale voltage generation part, and generates display data to be displayed on the liquid crystal panel PNL, on the basis of display data and control signals (such as a pixel clock, a display timing signal and a synchronizing signal) which are inputted from an external body. This display data is applied to the liquid crystal panel PNL in the first step.

The illumination power source INV supplies, in the second step, lighting electric power to the light source L, suitably a linear lamp, so that the light source L is blinked. In addition, the illumination power source INV is controlled by the illumination power source control circuit LCON so that the time quadrature value of the luminance value for each cycle in the second step is equalized.

In addition, the picture attribute detection circuit PPD detects the attribute of the display data (picture data) inputted thereto and controls the operation of the illumination power source control circuit LCON on the basis of the detection result in response to whether the luminance of the picture is high or low, whether the motion of the picture is large or small, or whether there is a motion in the picture. This picture attribute detection circuit PPD is ordinally in operation, and automatically controls the operation of the illumination power source control circuit LCON in response to the attribute of picture data inputted to the picture attribute detection circuit PPD. However, the liquid crystal display device may also be constructed so that, while a user is observing the display screen or when the user anticipates that a picture to be displayed is a kinametic picture, a user can manipulate a manual operation part MN (such as a switch) to operate the illumination power source control circuit LCON as desired.

Specific embodiments of the driving method according to the invention and comparative examples for clarifying the advantages of the invention will be described below.

〈Embodiment 1〉

In a general liquid crystal display device, a change from white display to black display or a change from black display to white display is effected in response to a variation in applied voltage. A liquid crystal layer to which Embodiment 1 is to be applied may be any of the following types: a twisted nematic (TN) type or a vertical alignment type of TFT operation with a twist angle of approximately 90°, a super twisted nematic (STN) type of time-division operation with a twist angle of approximately 200°-260°, and a lateral electric field type (i.e., IPS type) in which the liquid crystal layer responds to an electric field occurring in the horizontal direction relative to substrates surfaces.

In the case of each of the TN type and the lateral electric field type, if contrast ratio and brightness are to be made compatible, the product Δnd of the refractive index anisotropy Δn and the cell gap d of the liquid crystal layer is preferably in the range of 0.2 μm (the unit "μm" herein represents micrometer) to 0.6 μm. In the case of the STN type, the product Δnd is preferably in the range of 0.5 μm to 1.2 μm, and in the case of the lateral electric field type, the product Δnd is preferably in the range of 0.2 μm to 0.5 μm.

In Embodiment 1, a pair of glass substrates each having a thickness of 0.7 mm are used as substrates which constitute a liquid crystal panel, and thin film transistors for selecting pixels are formed on the inner surface of one of the pair of substrates. Between this pair of substrates, the dielectric anisotropy Δnε of the liquid crystal layer is positive and the product Δnd thereof is 0.41 μm.

Although the twist angle of the liquid crystal layer is 90°, it is desirable to select a lower twist angle such as 70° if the response speed of the liquid crystal is to be made faster. Since the product Δnd at this time becomes far smaller (0.35 μm), it is necessary to select a narrower cell gap (d).

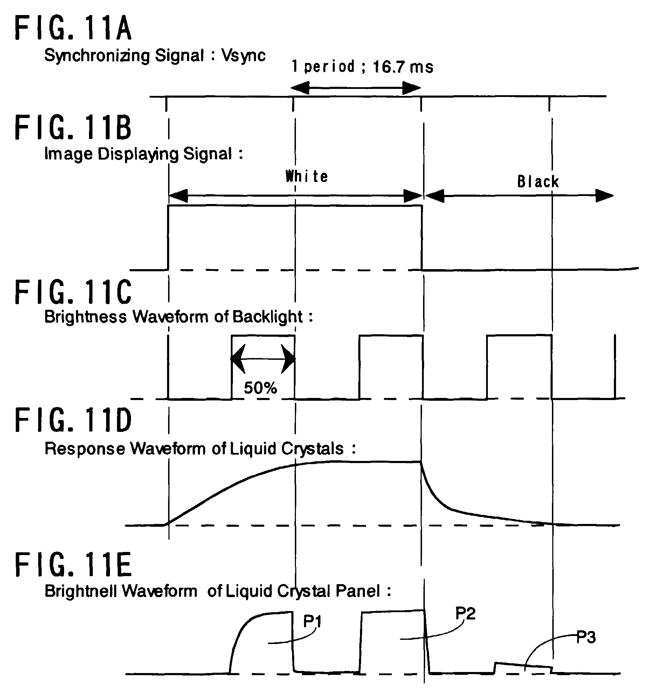

Figs. 11A to 11E are temporal luminance waveform diagrams relative to an arbitrary point on the screen of a liquid crystal panel which constitutes a liquid crystal display device for illustrating Embodiment 1 of the present invention. Fig. 11A shows a synchronizing signal (a vertical synchronizing signal $V_{SYNC}$) whose cycle is 16.7 ms. Fig. 11B shows the waveform of a picture display signal (display data) which provides a white display against a black background (the waveform obtained when a change from black display to white display occurs and then a change from white display to black display occurs). Fig. 11C shows the luminance waveform of a backlight. Fig. 11D shows the response waveform of the liquid crystal. Fig. 11E shows the luminance waveform of the liquid crystal panel.

The picture display signal (display data) shown in Fig. 11B is scanned at the 60-Hz cycle (16.7 ms) of the vertical synchronizing signal $V_{SYNC}$ shown in Fig. 11A. The backlight is synchronized with the picture display signal, and blinks at a duty ratio of 50%. The backlight luminance waveform shown in Fig. 11C is the result obtained when a black box is blinked against a blue background, and the response of the liquid crystal in the liquid crystal response waveform shown in Fig. 11D is such that the rise time required for its luminance to change from 0% to 90% is 16 ms, and the time required for the luminance to change from 100% to 10% is 10 ms.

The value obtained by multiplying the luminance waveform of this backlight by the response waveform of the liquid crystal is an actual luminance waveform of the liquid crystal panel (as shown in Fig. 11E). It can be seen from Fig. 11E that the luminance area ratio between the first two frames P1 and P2 (for two vertical synchronizing signals $V_{SYNC}$) is nearly equal, and the luminance area ratio of the third frame P3 to each of the frames P1 and P2 is approximately 5%.

It is apparent that Embodiment 1 is capable of ameliorating a degradation of a kinametic picture, i.e., a blurred outline of a kinametic picture.

〈Comparative Example 1〉

To confirm the advantage of the above-described Embodiment 1, displaying was performed in a manner similar to that shown in Fig. 11 under the condition that: the blinking starting time of the light source and the scanning starting time of the picture display signal were not synchronized with each other; the length of each cycle was slightly changed; and the other arrangement was identical to that of Embodiment 1.

The luminance waveform of the liquid crystal panel having this construction became a different waveform every time because the blinking starting time of the light source and the scanning starting time of the picture display signal were not synchronized with each other. Moreover, visual observations showed that the degradation of kinametic picture display (the blurred outline of a kinametic picture) was not ameliorated.

〈Comparative Example 2〉

Displaying was performed in a manner similar to that shown in Fig. 11 under the condition that the cycle of the bright state of the light source during blinking was synchronized with the first half of one cycle of the vertical synchronizing signal $V_{SYNC}$ and the other arrangement was identical to that of Embodiment 1.

As a result, in the luminance area waveform of each frame, the luminance area per cycle did not become constant, and a picture was displayed as a duplicate image like a ghost phenomenon for a television picture and the degradation of kinematic picture display (the blurred outline of a kinametic picture) was not ameliorated.

〈Embodiment 2〉

Embodiment 2 used a parallel alignment-type liquid crystal panel having a $\Delta$nd value of 0.28 μm and a twist angle of 0 degree, and the liquid crystal panel was a liquid crystal panel which operated in lateral electric field mode in which an electric field parallel to substrate surfaces was applied to its liquid crystal. The response of the liquid crystal was such that the rise time required for its luminance to change from 0% to 90% was 20 ms, and the time required for the luminance to change from 100% to 10% was 15 ms.

When a bright state and a dark state are alternately repeated with an average lamp (white) at a duty ratio of 50%, a luminance variation with time is as follows. If the saturation value of the luminance of the linear lamp is 100%, the rise time required for the luminance to change from 0% to 90% is about 5 ms, while the fall time required for the luminance to change from 100% to 10% is about 8 ms.

The starting time of the bright state is delayed by about 8 ms from the scanning starting time of the display picture signal, while the ending time of the bright state of the lamp is advanced by about 2 ms from the starting time of the next frame, whereby the luminance area ratio of each frame becomes nearly equal and the degradation of kinametic picture display (the blurred outline of a kinametic picture) is completely ameliorated.

〈Embodiment 3〉

A side edge backlight was used as the light source of the liquid crystal display device, and the side edge backlight included six linear lamps, three of which were disposed on the top edge side of a light guide plate and the other three of which were disposed on the bottom edge side of the light guide plate. The synchronizing time and the bright-state starting time of the linear lamps disposed on each of the top edge side and the bottom edge side were delayed by about a time equal to 1/2 of the cycle of the vertical synchronizing signal $V_{SYNC}$. Thus, the degradation of kinametic picture display (the blurred outline of a kinametic picture) over the entire liquid crystal panel was ameliorated.

Incidentally, although in Embodiment 3 separate inverters are used for the top edge side linear lamps and for the bottom edge side linear lamps, such inverters may also be constructed as one inverter.

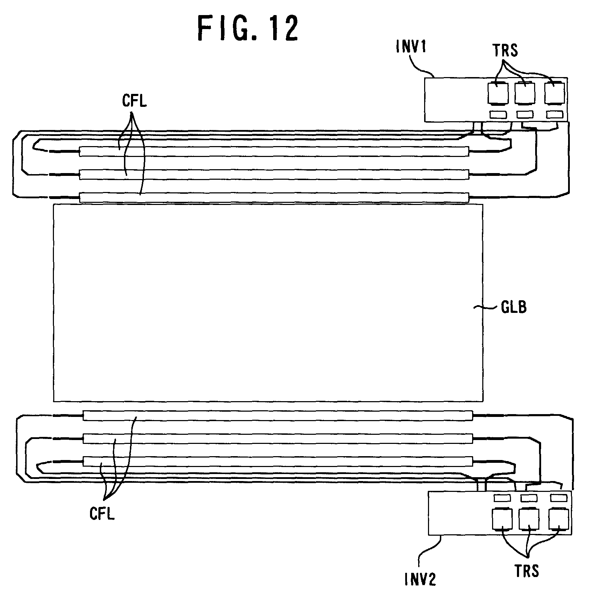

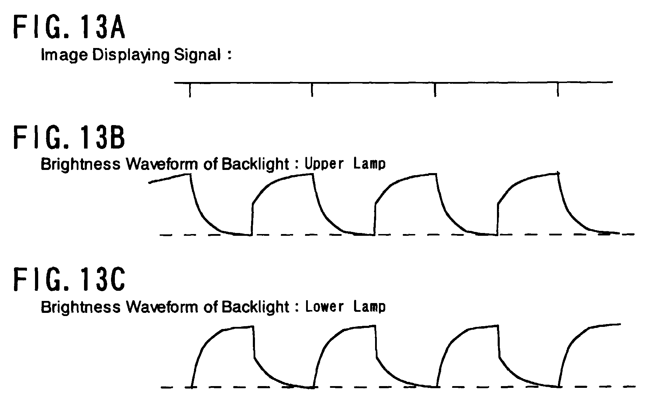

Fig. 12 is a diagrammatic view illustrating the construction of the light source of Embodiment 3, and Figs. 13A, 13B and 13C are the luminance waveform diagrams of the linear lamps which constitute the light source. As shown in Fig. 12, the light source of Embodiment 3, i.e., the backlight, uses a light source including six linear lamps CFL, three of which are disposed on the top edge side of a light guide plate GLB and the other three of which are disposed on the bottom edge side of the light guide plate GLB. These linear lamps CFL are supplied with electric power via a transformer TRS disposed in the illumination power source INV.

Lighting control was exerted on these linear lamps CFL in a manner as shown in the waveform diagrams of Figs. 13A to 13C. As compared with a picture display signal (display data) which is applied in synchronism with the vertical synchronizing signal $V_{SYNC}$ as shown in Fig. 13A, blinking waveforms (backlight luminance waveforms) are controlled in such a manner that the starting time of the bright state of the top edge side linear lamps (top-side lamps) shown in Fig. 13B is delayed by an about 1/2 cycle from the vertical synchronizing signal $V_{SYNC}$, white the starting time of the bright state of the bottom edge side linear lamps (bottom-side lamps) shown in Fig. 13B is synchronized with the vertical synchronizing signal $V_{SYNC}$ and rises within a time equal to about 1/2 of the cycle of the vertical synchronizing signal $V_{SYNC}$. Thus, the advantage described above in connection with Embodiment 3 is obtained.

(Embodiment 4）

In the case of the light source having the construction described above in connection with Embodiment 3 with reference to Figs. 12 and 13, when the duty ratio was 100%, the lamp current of the linear lamps CFL was 6 mA and the luminance was 300 cd/m$^2$ (the unit "cd" herein represents candela), but when the duty ratio was made 50%, the luminance was reduced to half, i.e., 200 cd/m$^2$, and the brightness of the display screen decreased.

Then, when the lamp current was made 8 mA, the luminance was restored to 300 cd/m$^2$, and the power consumption of the light source did not increase.

With the construction of Embodiment 4, the occurrence of the blurred outline of kinametic picture display was restrained.

Incidentally, in each of the above-described embodiments, the experiments were performed with the TN and lateral electric field type of liquid crystal display devices. However, the present invention can achieve similar advantages in any type of liquid crystal display device, such as a liquid crystal display device in which a liquid crystal layer is vertically aligned, a liquid crystal display device of a so-called hybrid alignment type in which the surface portion of a liquid crystal adjacent to a surface of one substrate is vertically aligned, while the surface portion of the liquid crystal adjacent to a surface of the other substrate is aligned in parallel therewith, and a ferroelectric liquid crystal type of liquid crystal display device.

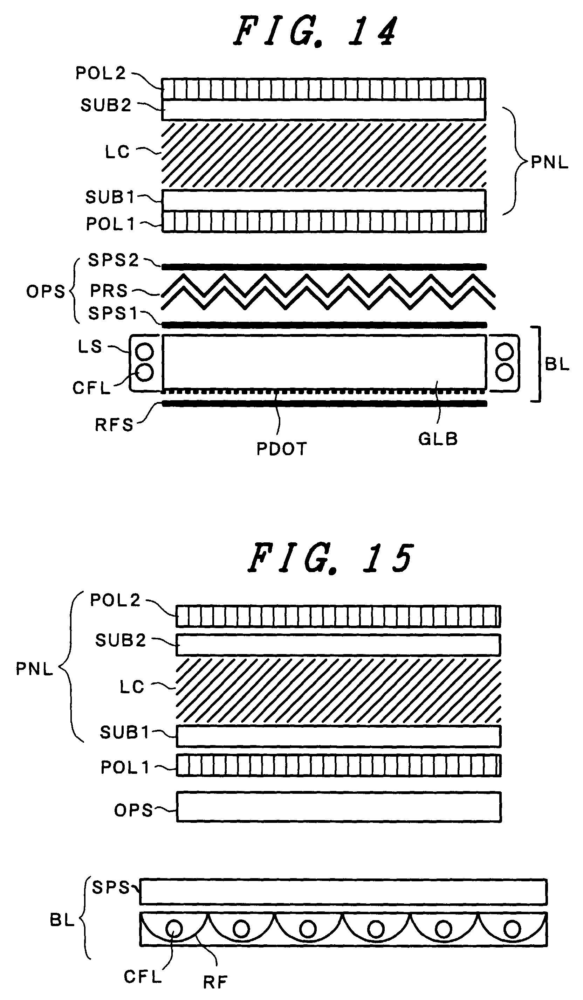

Fig. 14 is a diagrammatic view illustrating one example of the cross-sectional structure of the liquid crystal display device according to the present invention. In Fig. 14, the liquid crystal panel PNL includes a liquid crystal layer LC interposed between a lower substrate SUB1 and an upper substrate SUB2, and a lower polarizer POL1 and an upper polarizer POL2 are disposed in such a manner that the liquid crystal panel PNL is interposed therebetween.

A backlight BL which is an illumination light source for the liquid crystal panel PNL is disposed on the back surface of, i.e., below, the liquid crystal panel PNL with an optical sheet OPS interposed therebetween, and the optical sheet OPS is made of diffusion sheets SPS1 and SPS2 and a prism sheet PRS. The backlight BL includes a linear lamp CFL which is a fluorescent lamp disposed along an edge side of an approximately rectangular light guide plate GLB formed of a transparent material. In this construction example, two linear lamps CFL are disposed on a pair of parallel edge sides of the light guide plate GLB. The number of linear lamps are selected in response to the brightness necessary for the liquid crystal display device, and three or more linear lamps may be disposed along each of the edge sides as shown in Fig. 12. As a matter of course, one linear lamp may be disposed along each of the edge sides, or linear lamps may also be disposed along one of the edge sides.

A reflection pattern (such as a dotted print) PDOT for uniformizing the distribution of illumination light emitted from the light guide plate GLB toward the liquid crystal panel PNL is formed on the back surface of the light guide plate GLB (opposite to the liquid crystal panel PNL). Symbol RFS denotes a reflection sheet.

Two glass substrates were used as the substrates SUB1 and SUB2 which constituted the liquid crystal panel PNL, respectively. Each of the glass substrates had a thickness of 0.7 mm and polished surfaces, and had as ITO (Indium-Tin-Oxide) transparent electrode deposited by a sputtering method.

An inner surface of each of the substrates SUB1 and SUB2 was coated with a polyimide alignment control film by a spinner, and was calcined at 250°C for 30 minutes, followed by rubbing treatment, whereby an alignment control ability was given to the inner surface of each of the substrates SUB1 and SUB2. In addition, optical retardation films made of polycarbonate may be disposed, respectively, between the substrates SUB1 and the polarizer POL1 and between the substrate SUB2 and the polarizer POL2.

Fig. 15 is a diagrammatic view illustrating another example of the cross-sectional structure of the liquid crystal display device according to the present invention. The shown liquid crystal display device is a liquid crystal display device provided with a direct backlight. Similarly to the liquid crystal panel PNL shown in Fig. 14, the liquid crystal panel PNL includes the liquid crystal layer LC interposed between the lower substrate SUB1 and the upper substrate SUB2, and the polarizers POL1 and POL2 which are respectively stacked on the outer surfaces of the lower substrate SUB1 and the upper substrate SUB2.

The backlight BL which is an illumination light source for the liquid crystal panel PNL is disposed on the back surface of (directly below) the liquid crystal panel PNL with the optical sheet OPS such as a prism sheet being interposed therebetween. This backlight BL is made of a reflector RF, plural linear lamps CFL disposed above the reflector RF in parallel with one another, and a diffusion sheet SPS disposed above the linear lamps CFL.

In the shown construction, the reflector RF which constitutes the backlight BL has an uneven portion along the direction of juxtaposition of the linear lamps CFL, and the respective linear lamps CFL are positioned in the concave portions of the uneven portion so that light emitted from each of the linear lamps CFL is effectively directed toward the liquid crystal panel PNL. The diffusion sheet SPS has the function of diffusing light from the linear lamps CFL and the reflector RF to average the distribution of brightness of illumination light toward the liquid crystal panel PNL. The other arrangement is similar to that described above with reference to Fig. 14.

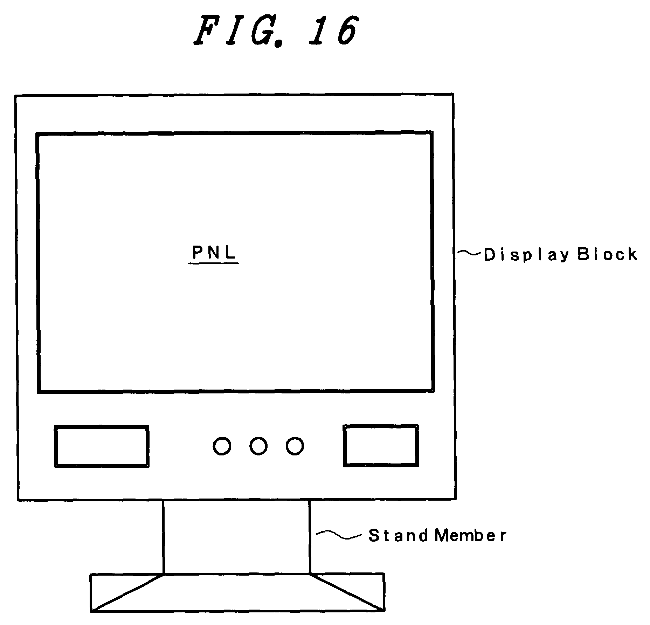

Fig. 16 is a view showing the external appearance of one example of a high-definition television set in which a liquid crystal display device according to the invention is mounted. A backlight which constitutes the liquid crystal display device mounted on the screen, i.e., the display part, of the television set has the construction of any of the above-described embodiments of the invention.

Incidentally, the liquid crystal display device according to the invention is not limited to the above-described type of television set, and, as described previously, can also be used as a monitor for a desktop personal computer or a display device for a notebook personal computer or other equipment.

In addition, the invention can similarly be applied to a chip-on-glass scheme in which driver ICs (such as drain drivers and gate drivers) are directly mounted on either one of the substrates of a liquid crystal panel, or to a liquid crystal display device using a liquid crystal panel based on a related art mounting scheme in which drivers IC are mounted by using TCPs.

As is apparent from the foregoing description, according to the present invention, it is possible to provide a liquid crystal display device in which the occurrence of a blurred outline of a kinamatic picture, particularly in kinamatic picture display in which a picture travels, can be prevented to improve kinametic picture display characteristics, by controlling the lighting time of a light source which illuminates a liquid crystal panel is controlled, and also in which even if the number of linear lamps which constitute the light source are increased, the lowering of the luminance efficiency can be restrained to increase the emission efficiency of the linear lamps, whereby it is possible to realize high luminance and superior viewing angle characteristics.

While we have shown and described several embodiments in accordance with the present invention, it is understood that the same is not limited thereto but is susceptible of numerous changes and modifications as known to those skilled in the art, and we therefore do not wish to be limited to the details shown and described herein but intend to cover all such changes and modifications as are encompassed by the scope of the appended claims.

## Claims

1. A liquid crystal display device (LCD) comprising:

   a liquid crystal panel (PNL) including a pair of substrates (SUB1, SUB2) disposed to oppose each other and a liquid crystal layer (LC) interposed between the pair of substrates, at least one of the pair of substrates having data signal lines, data electrodes, scanning signal lines and scanning electrodes;
   a display control part (CRL) which controls a first step of applying voltages corresponding to a display picture signal to the electrodes on the basis of picture data and a timing signal which are inputted from an external part; and
   an illumination power source (INV) which controls a light source (L, BL) for illuminating the liquid crystal panel and a second step of blinking the light source,
   the first step of supplying the display picture signal and the second step of blinking the light source being respectively scanned at arbitrary cycles,
   further comprising:
   an illumination power source control part (LCON) which controls display luminance of the liquid crystal panel so that a time quadrature value of a luminance value for each cycle in the second step is equalized, the display luminance being obtained by the liquid crystal panel being illuminated by the light source when luminance signals of the same level are supplied to the electrodes of the liquid crystal panel.

2. A liquid crystal display device according to claim 1, further comprising:

   a picture attribute detection part (PPD) which detects an attribute of the picture data inputted to the display control part and controls the operation of the illumination power source control part (LCON).

3. A liquid crystal display device according to claim 2, wherein the attribute of the picture data detected by the picture attribute detection part is at least one of a brightness, a data amount and a motion of the inputted picture data.

4. A liquid crystal display device according to claim 1, 2 or 3, wherein the display control part (CRL) has a timing controller (TCON) which controls timing in the first step, and controls blinking of the light source by the illumination power source control part by synchronizing the blinking with a pixel clock outputted from the timing controller.

5. A driving method of a liquid crystal display device which comprises:

   a liquid crystal panel including a pair of substrates disposed to oppose each other and a liquid crystal layer interposed between the pair of substrates, at least one of the pair of substrates having data signal lines, data electrodes, scanning signal lines and scanning electrodes;
   a display control part which controls a first step of applying voltages corresponding to a display picture signal to the electrodes on the basis of picture data and a timing signal which are inputted from an external part; and

an illumination power source which controls a light source for illuminating the liquid crystal panel and a second step of blinking the light source,

wherein

the first step of supplying the display picture signal and the second step of blinking the light source are respectively scanned at arbitrary cycles, and

a display luminance which is obtained by the liquid crystal panel being illuminated by the light source when luminance signals of the same level are supplied to the display picture is controlled so that a time quadrature value of a luminance value for each cycle in the second step is equalized.

6. A driving method of a liquid crystal display device which comprises:

a liquid crystal panel including a pair of substrates disposed to oppose each other and a liquid crystal layer interposed between the pair of substrates, at least one of the pair of substrates having data signal lines, data electrodes, scanning signal lines and scanning electrodes;

a display control part which controls a first step of applying voltages corresponding to a display picture signal to the electrodes on the basis of picture data and a timing signal which are inputted from an external part; and

an illumination power source which controls a light source for illuminating the liquid crystal panel and a second step of blinking the light source,

wherein

the first step of supplying the display picture signal and the second step of blinking the light source are respectively scanned at arbitrary cycles,

display luminance of the liquid crystal panel is controlled so that a time quadrature value of a luminance value for each cycle in the second step is equalized, the display luminance being obtained by the liquid crystal panel being illuminated by the light source when luminance signals of the same level are supplied to the electrodes of the liquid crystal panel, and

an attribute of the picture data inputted to the display control part is detected to control the operation of the illumination power source control part.

7. A driving method of the liquid crystal display device according to claim 6, wherein the attribute of the picture data detected by the picture attribute detection part is at least one of a brightness, a data amount and a motion of the inputted picture data.

8. A driving method of the liquid crystal display device according to claim 5 or 6, wherein the second step of blinking the light source has an arbitrary constant cycle and the cycle is equal to the cycle of the first step of scanning the display picture signal, the blinking cycle of the light source being a blinking cycle made of a bright state and a dark state, the period of the bright state being the second half of the cycle of the first step.

9. A driving method of the liquid crystal display device according to claim 5 or 6, wherein the starting time of a bright state of the light source is delayed by an arbitrary constant time from the starting time of the first step of supplying the display picture signal.

10. A driving method of the liquid crystal display device according to claim 9, wherein the starting time of the bright state of the light source during blinking is delayed by an arbitrary constant time from the starting time of the first step of supplying the signal for controlling the display picture, and the ending time of the bright state is advanced from the starting time of the next cycle of the first step of scanning the display picture signal.

11. A driving method of the liquid crystal display device according to claims 5 to 10, wherein the starting time of the bright state of the light source during blinking is delayed by the arbitrary constant time from the starting time of the first step of supplying the signal for controlling the display picture, a part which controls the display signal including plural scanning signal lines and plural data signal lines all of which are arranged in matrix form, the part which controls the display signal synchronizing the starting time of the bright state with the starting time of an n/2-numbered signal cycle, where n is the number of the signal scanning lines.

12. A liquid crystal display device (LCD) comprising:

a liquid crystal panel (PNL) including a pair of substrates (SUB1, SUB2) disposed to oppose each other and a liquid crystal layer (LC) interposed between the pair of substrates, at least one of the pair of substrates having data signal lines, data electrodes, scanning signal lines and scanning electrodes;

a display control part (CRL) which controls a first step of applying voltages corresponding to a display picture signal to the electrodes on the basis of picture data and a timing signal which are inputted from an external part; and

an illumination power source (INV) which controls a light source (L, BL) for illuminating the liquid crystal panel (PNL) and a second step of blinking the light source,

the first step of supplying the display picture signal and the second step of blinking the light source being respectively scanned at arbitrary cycles,

wherein

the light source has a transparent light guide plate (SPS) and a structure in which a linear lamp (CFL) is disposed along each of two parallel edge side surfaces of the transparent light guide plate,

the liquid crystal display device further comprising an illumination power source control part (LCON) which controls display luminance of the liquid crystal panel so that a time quadrature value of a luminance value for each cycle in the second step is equalized, the display luminance being obtained by the liquid crystal panel being illuminated by the light source when luminance signals of the same level are supplied to the electrodes of the liquid crystal panel.

13. A liquid crystal display device comprising:

a liquid crystal panel (PNL) including a pair of substrates (SUB1, SUB2) disposed to oppose each other and a liquid crystal layer (LC) interposed between the pair of substrates, at least one of the pair of substrates having data signal lines, data electrodes, scanning signal lines and scanning electrodes;

a display control part (CRL) which controls a first step of applying voltages corresponding to a display picture signal to the electrodes on the basis of picture data and a timing signal which are inputted from an external part; and

an illumination power source (INV) which controls a light source (L, BL) for illuminating the liquid crystal panel and a second step of blinking the light source,

the first step of supplying the display picture signal and the second step of blinking the light source being respectively scanned at arbitrary cycles,

wherein

the liquid crystal display device further comprising:

an illumination power source control part (LCON) which controls display luminance of the liquid crystal panel so that a time quadrature value of a luminance value for each cycle in the second step is equalized, the display luminance being obtained by the liquid crystal panel being illuminated by the light source when luminance signals of the same level are supplied to the electrodes of the liquid crystal panel; and

a picture attribute detection part (PPD) which detects an attribute of the picture data inputted to the display control part and controls the operation of the illumination power source control part,

the light source having a transparent light guide plate (SPS) and a structure in which a linear lamp (CFL) is disposed along each of two parallel edge side surfaces of the transparent light guide plate.

14. A driving method of a liquid crystal display device which comprises:

a liquid crystal panel including a pair of substrates disposed to oppose each other and a liquid crystal layer interposed between the pair of substrates, at least one of the pair of substrates having data signal lines, data electrodes, scanning signal lines and scanning electrodes;

a display control part which controls a first step of applying voltages corresponding to a display picture signal to the electrodes on the basis of picture data and a timing signal which are inputted from an external part;

an illumination power source which controls a light source for illuminating the liquid crystal panel and a second step of blinking the light source,

the light source having a transparent light guide plate and a structure in which a linear lamp is disposed along each of two parallel edge side surfaces of the transparent light guide plate; and

an illumination power source control part which controls display luminance of the liquid crystal panel so that a time quadrature value of a luminance value for each cycle in the second step is equalized, the display luminance being obtained by the liquid crystal panel being illuminated by the light source when luminance signals of the same level are supplied to the electrodes of the liquid crystal panel,

the first step of supplying the display picture signal and the second step of blinking the light source being respectively scanned at arbitrary cycles,

wherein

the bright-state starting time of each of the linear lamps during each blinking cycle thereof, which are respectively disposed along the two edge side surfaces, is delayed by a time equal to 1/2 of the cycle of the first step of supplying a signal for controlling the display picture.

**15.** A driving method of the liquid crystal display device according to claim 14, wherein the time required for each of the linear lamps to change from a bright state to a dark state is approximately 2/3 of one period of a vertical synchronizing signal.

**16.** A driving method of the liquid crystal display device according to claim 14, wherein the time required for each of the linear lamps to change from a bright state to a dark state or from a dark state to a bright state is 1 ms or less.

**17.** A driving method of the liquid crystal display device according to claim 14, wherein the rate of a luminance variation with time in which each of the linear lamps changes from a bright state to a dark state and the rate of a luminance variation with time in which the liquid crystal panel changes from a bright state to a dark state are made equal to each other, and the ending times of the luminance variations are synchronized with each other and the difference in luminance between the luminance variations is made 5% or less.

**18.** A driving method of the liquid crystal display device according to claim 12 or 13, wherein the time required for each of the linear lamps to change from the bright state to the dark state or from the dark state to the bright state is 10 ms or less, and each of the linear lamps has red (R), green (G) and blue (B) phosphors and the blue (B) phosphor has the smallest afterglow ratio of all the red (R), green (G) and blue (B) phosphors.

**19.** A driving method of the liquid crystal display device according to claim 14, wherein the time required for the emission luminance of the blue (B) phosphor of each of the linear lamps to change from the bright state to the dark state is 1 ms or less.

**20.** A driving method of the liquid crystal display device according to claim 14, wherein the time required for each of the linear lamps to change from a 50% luminance to a 10% luminance and the time required for the luminance response time of the liquid crystal panel to change from a 50% luminance to a 10% luminance are made equal to each other, where the luminance of the bright state of each of the linear lamps is 100%.

**21.** A driving method of the liquid crystal display device according to claim 14, wherein the time required for the luminance of the liquid crystal panel to change from 100% to 10% is within a dark period of one blinking cycle of the light source, where the luminance of the bright state of the liquid crystal panel is 100%.

**22.** A driving method of the liquid crystal display device according to claim 14, wherein a period which is occupied by the bright state in one cycle period during which each of the linear lamps blinks is 30% or more of the one cycle period.

**23.** A driving method of the liquid crystal display device according to claim 14, wherein in one cycle period during which each of the linear lamps blinks, the dark-state luminance of each of the linear lamps is 5% or more of a peak value of the bright-state luminance of the same.

**24.** A driving method of the liquid crystal display device according to claim 14, wherein in one cycle period during which each of the linear lamps blinks, the luminance area ratio of a dark state to a bright state is 1:3 or more.

**25.** A driving method of the liquid crystal display device according to claim 14, wherein a cycle during which each of the linear lamps blinks is n times a cycle during which the display signal is scanned.

**26.** A driving method of the liquid crystal display device according to claim 14, wherein each of the linear lamps is made to blink without depending on the cycle ratio of a bright state to a dark state in one cycle, an electric power to be supplied to each of the linear lamps being made constant.

**27.** A driving method of the liquid crystal display device according to claim 26, wherein electric power supplied when each of the linear lamps is blinking is made equal to electric power supplied when neither of the linear lamps is blinking, by controlling the current of each of the linear lamps.

# FIG. 1

CRL

DATA
CL

TCON

T

DDR

G
D
R

PNL

LCON → INV → L

# FIG. 2

CRL

DATA
CL

TCON

T

DDR

G
D
R

PNL

LCON → INV → L

MN

PPD

# FIG. 3A
Synchronizing Signal : Vsync

1 period ; 16.7 ms

# FIG. 3B
Image Displaying Signal :

White

Black

# FIG. 3C
Brightness Waveform of CRT :

# FIG. 3D
Brightness Wave form of Liquid Crystal Panel :

# FIG. 4A

Synchronizing Signal : Vsync

1 period ; 16.7 ms

# FIG. 4B

Image Displaying Signal :

White        Black

# FIG. 4C

Brightness wave form of Backlight :

# FIG. 4D

Response Waveform of Liquid Crystals :

# FIG. 4E

Brightness Waveform of Liquid Crystal Panel :

# FIG. 5A

Synchronizing Signal : Vsync    1 period ; 16.7 ms

# FIG. 5B

Response Waveform of Liquid Crystals :

# FIG. 5C

Brightness Waveform of Backlight : Bright in the First Half

# FIG. 5D

Brightness Waveform of Liquid Crystal Panel :

Ghost Waveform          Ghost Waveform

# FIG. 5E

Brightness Waveform of Backlight : Bright in the Latter Half

# FIG. 5F

Brightness Waveform of Liquid Crystal Panel :

# FIG. 6A
Synchronizing Signal : Vsync

1 period ;

# FIG. 6B
Brightness Waveform of Backlight : DUTY 50%

# FIG. 6C
Brightness Waveform of Backlight : DUTY 75%

# FIG. 6D
Brightness Waveform of Backlight : DUTY 25%

# FIG. 7A
Synchronizing Signal : Vsync

1 period ;

# FIG. 7B
Brightness Waveform of Backlight : DUTY 100%

Brightness Peak
Value 100%

# FIG. 7C
Brightness Waveform of Backlight : DUTY 50%

Brightness Peak
Value 150%

# FIG. 7D
Brightness Waveform of Backlight : DUTY 75%

Brightness Peak
Value 133%

# FIG. 7E
Brightness Waveform of Backlight : DUTY 25%

Brightness Peak
Value 400%

# FIG. 8A
Synchronizing Signal : Vsync

1 period ; 16.7 ms

# FIG. 8B
Response Waveform of Liquid Crystals :

# FIG. 8C
Brightness Waveform of Backlight :

# FIG. 8D
Superposition of Brightness Waveform of Backlight
and Response Waveform of Liquid Crystals. :

# FIG. 8E
Brightness Waveform of Liquid Crystal Panel :

Δt

# FIG. 9A

Synchronizing Signal : Vsync

1 period ; 16.7 ms

# FIG. 9B

Brightness Waveform of Fluorescent Material in Lamp : Blue

100%

10%

# FIG. 9C

Brightness Waveform of Fluorescent Material in Lamp : Green

100%

10%

6 ms

# FIG. 9D

Brightness Waveform of Fluorescent Material in Lamp : Red

100%

10%

# FIG. 9E

Brightness Waveform of Fluorescent Material in Lamp : White

# F I G. 10A
Synchronizing Signal : Vsync

1 period ; 16.7 ms

# F I G. 10B
Response Waveform of Liquid Crystals :

100%

50%

$t_{LC}$

# F I G. 10C
Response Waveform of Backlight :

100%

50%

$t_{LAMP}$

# FIG. 11A
Synchronizing Signal : Vsync

1 period ; 16.7 ms

# FIG. 11B
Image Displaying Signal :

White          Black

# FIG. 11C
Brightness Waveform of Backlight :

50%

# FIG. 11D
Response Waveform of Liquid Crystals :

# FIG. 11E
Brightnell Waveform of Liquid Crystal Panel :

P1          P2          P3

# FIG. 12

# FIG. 13A

Image Displaying Signal :

# FIG. 13B

Brightness Waveform of Backlight : Upper Lamp

# FIG. 13C

Brightness Waveform of Backlight : Lower Lamp

## FIG. 14

POL2
SUB2
LC
SUB1
POL1

PNL

SPS2
OPS { PRS
SPS1

LS
CFL

BL

RFS

PDOT          GLB

## FIG. 15

POL2
SUB2
PNL {
LC
SUB1
POL1

OPS

SPS
BL {
CFL    RF

# FIG. 16

PNL ~Display Block

~Stand Member

# FIG. 17

CRL

GDR

Drain Signal Lines

Gate Signal Lines

Display Data

Red (R)

Green(G)

Blue (B)

PNL

Control Signal Clock

Display Timing Signal

Synchronizing Signal

TCON

Carry Signal

3 Vin
(5 Vin)

Input
Voltage

Clock

Data Bus

DRr

PWU

EP 1 091 341 A2

# FIG. 18

HTV

MPX

DDR

Display Data

Display Timing
Synchronizing
Signal

Clock

TCON

CRL

BF

CVD

CDD

GOV

LST

GFV

GDR

D/D

3Vin
(5Vin)

→ **Analog Signal**

→ Data, Clock

⇒ Power Source Line

EP 1 091 341 A2

# FIG. 19A

Signal from Main Frame

DCLK

HSYNC

DTMG

Display Data ‖ Effective Display Data ‖

# FIG. 19B

Outputs for Drain Driver

CL1

CL2

Drain Data Bus ‖ Effective Display Data ‖

# FIG. 19C

Signal from Main Frame

VSYNC

HSYNC

DTMG

Vertical Retrace Period

1st Display Line

# FIG. 19D

Output for Gate Driver

FLM

CL3

EP 1 091 341 A2

# FIG. 20A

LCD

Vertical Edge Portion

A

Moving

# FIG. 20B

Enlarged

Extracting a certain 1 Row and Showing it sequentially

# FIG. 20C

B

Time (Every 1/4 Frame)

1 Frame

Shift of Gazing Point

Blurred

Integrating Brightness of the Row

# FIG. 20D

Blurring of the Outline of Moving Object

# FIG. 21

In the Case of Impulse Luminescence

# FIG. 22A

### Lamp Arrangement
### (Direct Backlight with 8 Lamps)

# FIG. 22B

### Brightness Waveform

EP 1 091 341 A2